# EUROPEAN PATENT SPECIFICATION

(11) **EP 3 396 928 B1**
(45) Date of publication and mention of the grant of the patent: **30.06.2021**
(21) Application number: 16884309.2
(22) Date of filing: 11.01.2016
(51) Int. Cl.: H04W 12/08, H04L 29/06, H04L 29/12

(54) **METHOD FOR MANAGING NETWORK ACCESS RIGHTS AND RELATED DEVICE**
VERFAHREN ZUR VERWALTUNG VON NETZWERKZUGRIFFSRECHTEN UND ZUGEHÖRIGE VORRICHTUNG
PROCÉDÉ POUR GÉRER DES DROITS D'ACCÈS À UN RÉSEAU ET DISPOSITIF ASSOCIÉ

(43) Date of publication of application: 31.10.2018
(73) Proprietor: Huawei Technologies Co., Ltd., Longgang District Shenzhen, Guangdong 518129 (CN)
(72) Inventor: FANG, Ping, Shenzhen Guangdong 518129 (CN); PANG, Gaokun, Shenzhen Guangdong 518129 (CN); LI, Xiaoxian, Shenzhen Guangdong 518129 (CN)
(74) Representative: Thun, Clemens
(86) International application number: PCT/CN2016/070618
(87) International publication number: WO 2017/120746

(56) References cited:
- CN-A- 103 442 097
- CN-A- 104 469 762
- CN-A- 105 050 086
- US-A1- 2006 079 231
- US-A1- 2012 203 919
- US-A1- 2013 331 083
- US-A1- 2015 229 475

## Description

### TECHNICAL FIELD

Embodiments of the present invention relate to the field of wireless communications technologies, and specifically, to a network access permission management method and a related device.

### BACKGROUND

A wireless fidelity (Wireless Fidelity, Wi-Fi) technology has advantages such as quick deployment, convenient use, and a high transmission rate. Therefore, users can conveniently access networks by using terminal devices such as smartphones, notebook computers, and tablet computers that support the Wi-Fi technology. When terminal devices that support the Wi-Fi technology (Wi-Fi device for short) need to perform secure communication, the terminal devices first need to construct a Wi-Fi network, and perform encryption communication to ensure communication security. The Wi-Fi network is a network in which communication is performed by using the Wi-Fi technology, such as a wireless local area network (Wireless Local Area Network, WLAN), a peer-to-peer (Peer to Peer, P2P) network, and a neighbor awareness network (Neighbor Awareness Network, NAN). A Wi-Fi device in the Wi-Fi network may be referred to as a station device.

To ensure security in the constructed Wi-Fi network, Wi-Fi Alliance is formulating the Device Provisioning Protocol (Device Provisioning Protocol, DPP). In the DPP protocol, a configurator (Configurator, such as a smartphone equipped with a camera) usually starts a network configuration by scanning a two-dimensional barcode of a Wi-Fi device, so as to construct a secure Wi-Fi network. Using construction of a home network as an example, usually, the configurator first configures an access point (Access Point, AP) such as a home gateway device, to construct the home network. Then, the configurator configures another Wi-Fi device that is to access the home network, and specifically, configures, for the Wi-Fi device that is to access the home network, connection information including network access permission of the Wi-Fi device. The Wi-Fi device needs to access the home network by using the connection information configured for the Wi-Fi device, thereby implementing secure communication.

It is found in practice that, if a station device in the Wi-Fi network that is configured according to the DPP protocol is lost and the station device still has previously configured network access permission, the station device can still access the Wi-Fi network. Apparently, this reduces security of the Wi-Fi network.

US 2013/0331083A1 refers to a method and system for disabling traffic from a specific device or devices on a WiFi network via a remote script or other action. The method is implemented as an application that executes on a device such as a smart phone (e.g., IOS iPhone, Android operating system device) or tablet (e.g., iPad).

US 2012/0203919A1 refers to a method and apparatus for controlling connection between devices includes detecting a first device, determining whether the first device is included in a device list, obtaining information related to the first device from a second device, and establishing a connection with the first device based on the information from the second device.

US 2015/0229475A1 refers to a device provisioning (e.g., enrollment, configuration, and/or authentication) of a client device with a network device may be assisted using a configurator device. The configurator device may obtain a client public key associated with the client device and send the client public device to the network device. The network device may use the client public key in an authentication process between the network device and the client device. Following the authentication process, the client device may be configured for use with the network device to gain access to other network resources. In this manner, permission to gain access to the network device can be transparent to the user, often without the user having to enter codes or passwords.

US 2006/079231 A1 discloses a method for providing security service in a home network in which permission for a control device to access a controlled device is defined by access control information edited by a management device and sent to the controlled device for storage. The access control information can comprise time information used to accept or reject the access request.

### SUMMARY

Embodiments of the present invention disclose a network access permission management method and a related device, so as to improve security of a Wi-Fi network.
This problem is solved by the subject matter of the independent claims. Further implementation forms are provided in the dependent claims.

A first aspect of the embodiments of the present invention discloses a network access permission management method, applied to a Wi-Fi network. The method includes the following steps.

A first station device in the Wi-Fi network receives a network access permission update instruction generated by a configuration device in the Wi-Fi network. The network access permission update instruction is used to instruct to update network access permission of a target device in the Wi-Fi network, and the network access permission update instruction includes identification information of the target device and signature information of the configuration device.

The first station device verifies the signature information, and updates the network access permission of the target device according to the network access permission update instruction when the verification of the signature information succeeds.

The first station device further receives a connection request message sent by a second station device. The second station device is any device other than the first station device in the Wi-Fi network.

The first station device accepts or rejects a connection request of the second station device according to updated network access permission of the target device when identification information of the second station device matches the identification information of the target device.

According to this first aspect of the present invention, when a user needs to modify or revoke network access permission of a device, the configuration device may generate a network access permission update instruction for the device, and another device in the Wi-Fi network may update the network access permission of the device after receiving the instruction. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network.

According to the invention, the manner of the accepting or rejecting, by the first station device, a connection request of the second station device according to updated network access permission of the target device is:
accepting or rejecting the connection request of the second station device according to the updated network access permission of the target device when the network access permission update instruction further includes a network identifier of a network in which the target device is located and the network identifier is consistent with a network identifier of a network in which the second station device is located.
When the connection request of the second station device is accepted or rejected according to the updated network access permission of the target device, a step of determining the network identifier of the network access permission is added. In this way, network access permission update can be more targeted, and the network access permission of the target device can be more finely limited, thereby improving the security of the Wi-Fi network.

Optionally, a specific manner of the updating, by the first station device, the network access permission of the target device according to the network access permission update instruction when the verification of the signature information succeeds may be:
updating the network access permission of the target device according to the network access permission update instruction when the network access permission update instruction satisfies an update condition.

The update condition may include at least one of the following conditions:

The network access permission update instruction further includes a network identifier of a network in which the target device is located, and the network identifier is consistent with a network identifier of a network in which the first station device is located. A step of determining the network identifier is added, so that network access permission update is more targeted, thereby improving the security of the Wi-Fi network.

The network access permission update instruction further includes identification information of an update-executing device. The identification information of the update-executing device includes identification information of the first station device. The update-executing device is at least one device that is to update the network access permission of the target device in the Wi-Fi network. In this way, network access permission update is more targeted, thereby improving efficiency of updating network access permission of a device in the Wi-Fi network.

The network access permission update instruction further includes a first generation time. The first generation time is used to indicate a generation time of the network access permission update instruction, the first generation time is later than a second generation time, and the second generation time is a generation time of a network access permission instruction corresponding to historical network access permission of the target device that is recorded by the first station device. A network access permission update instruction includes a generation time, so that effectiveness of a plurality of network access permission update instructions for a same target device can be distinguished, and a newly generated network access permission update instruction can be used as a reference, thereby avoiding repetitive network access permission update or an update conflict.

Optionally, a specific manner of the updating, by the first station device, the network access permission of the target device may be alternatively:
when the network access permission update instruction is a network access permission revoking instruction, deleting, according to the network access permission revoking instruction, historical network access permission of the target device that is recorded by the first station device; or
when the network access permission update instruction is a network access permission modification instruction, modifying the historical network access permission according to the network access permission modification instruction.

Optionally, the first station device may further forward the network access permission update instruction when the verification of the signature information succeeds. After the configuration device in the Wi-Fi network sends the network access permission update instruction to one or more devices, the one or more devices may forward the instruction in the Wi-Fi network. In this way, the instruction can be quickly propagated, and efficiency of updating network access permission of a device can be improved.

Specifically, a specific manner of the forwarding, by the first station device, the network access permission update instruction to a station device other than the first station device and the configuration device in the Wi-Fi network may be:
sending a DPP discovery message to the station device other than the first station device and the configuration device in the Wi-Fi network, where the DPP discovery message carries the network access permission update instruction.

Specifically, a specific manner of the forwarding, by the first station device, the network access permission update instruction may be alternatively:
when the first station device has not forwarded the network access permission update instruction to a third station device, forwarding the network access permission update instruction to the third station device, and marking the third station device as an already-forwarded-to device, where the third station device is any device other than the first station device and the configuration device in the Wi-Fi network.

When forwarding the network access permission update instruction to a device, a station device may mark the third station device as a device that has already forwarded the network access permission update instruction. In this way, a same network access permission update instruction can be prevented from being repetitively forwarded by the station device to one device, thereby reducing a network resource waste and improving efficiency of updating network access permission.

A second aspect of the embodiments of the present invention discloses a station device, applied to a Wi-Fi network. The station device includes:
a receiving module, configured to receive a network access permission update instruction generated by a configuration device in the Wi-Fi network, where the network access permission update instruction is used to instruct to update network access permission of a target device in the Wi-Fi network, and the network access permission update instruction includes identification information of the target device and signature information of the configuration device;
a verification module, configured to verify the signature information;
an update module, configured to update the network access permission of the target device according to the network access permission update instruction when the verification of the signature information by the verification module succeeds, where
the receiving module is further configured to receive a connection request message sent by a second station device, where the second station device is any device other than the station device in the Wi-Fi network; and
a response module, configured to accept or reject a connection request of the second station device according to updated network access permission of the target device when identification information of the second station device matches the identification information of the target device.

According to this aspect of the present invention, when a user needs to modify or revoke network access permission of a device, the configuration device may generate a network access permission update instruction for the device, and another device in the Wi-Fi network may update the network access permission of the device after receiving the instruction. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network.

According to the present invention, the manner of the accepting or rejecting, by the response module, a connection request of the second station device according to updated network access permission of the target device when identification information of the second station device matches the identification information of the target device is:
accepting or rejecting the connection request of the second station device according to the updated network access permission of the target device when the network access permission update instruction further includes a network identifier of a network in which the target device is located, the network identifier is consistent with a network identifier of a network in which the second station device is located, and the identification information of the second station device matches the identification information of the target device.

When the connection request of the second station device is accepted or rejected according to the updated network access permission of the target device, a step of determining the network identifier of the network access permission is added. In this way, network access permission update can be more targeted, and the network access permission of the target device can be more finely limited, thereby improving the security of the Wi-Fi network.

Optionally, the station device may further include:
a sending module, configured to forward the network access permission update instruction when the verification of the signature information by the verification module succeeds.

It can be learned that the configuration device may generate the network access permission update instruction for the target device, and the network access permission update instruction may be for revoking the access permission of the target device in the Wi-Fi network or modifying the access permission of the target device. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network.

The embodiments of the present invention bring the following beneficial effects:

In the embodiments of the present invention, the configuration device generates the network access permission update instruction for the target device, and the network access permission update instruction may be for revoking the access permission of the target device in the Wi-Fi network or modifying the access permission of the target device in the Wi-Fi network. In this case, when a device receives the network access permission update instruction, and the verification of the signature information of the configuration device succeeds, the device can update the network access permission of the target device. If the target device sends the connection request to the device, the device can determine, according to the updated network access permission, whether to accept or reject the connection request of the target device. According to the embodiments of the present invention, the user may modify, based on a requirement, network access permission of any device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network..

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a Wi-Fi network according to an embodiment of the present invention;
FIG. 2 is a schematic flowchart of a network access permission management method according to an embodiment of the present invention;
FIG. 3 is a schematic flowchart of another network access permission management method not forming part of the present invention;
FIG. 4 is a schematic structural diagram of a station device according to an embodiment of the present invention;
FIG. 5 is a schematic structural diagram of another station device according to an embodiment of the present invention;
FIG. 6 is a schematic structural diagram of still another station device not forming part of the present invention;
FIG. 7 is a schematic flowchart of still another network access permission management method not forming part of the present invention;
FIG. 8 is a schematic flowchart of still another network access permission management method according to an embodiment of the present invention;
FIG. 9 is a schematic structural diagram of a configuration device not forming part of the present invention;
FIG. 10 is a schematic structural diagram of another configuration device not forming part of the present invention; and
FIG. 11 is a schematic structural diagram of a network access permission management system not forming part of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Embodiments of the present invention disclose a network access permission management method and a related device, so as to improve security of a Wi-Fi network. Details are separately described in the following.

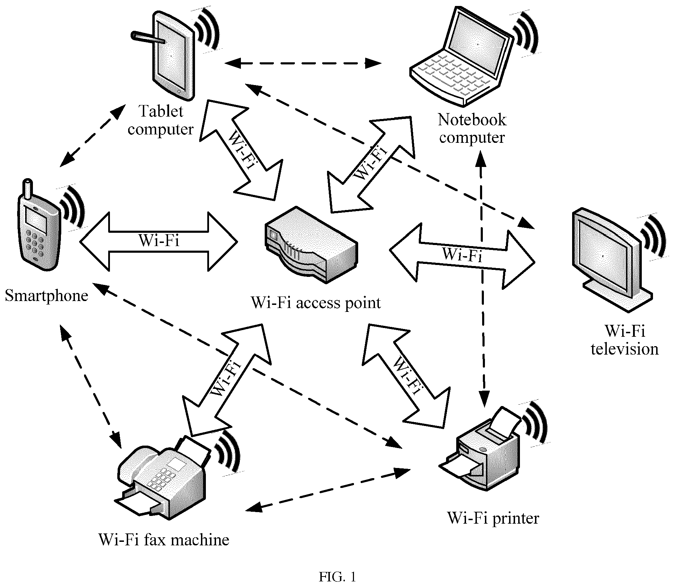

To better understand the network access permission management method and the related device disclosed in the embodiments of the present invention, an architecture of a Wi-Fi network to which the embodiments of the present invention are applicable is first described below. Referring to FIG. 1, FIG. 1 is a schematic architectural diagram of a Wi-Fi network according to an embodiment of the present invention. The architecture shown in FIG. 1 includes terminal devices such as a Wi-Fi access point (Access Point, AP), a smartphone having a Wi-Fi function, a tablet computer, a notebook computer, a television, a printer, and a fax machine. Each of the terminal devices may also be referred to as a Wi-Fi device. Certainly, the network architecture shown in FIG. 1 only provides some terminal devices, and may further include household appliances such as a refrigerator and an air conditioner having a Wi-Fi function. This is not limited in this embodiment of the present invention. An AP may be a device such as a wireless router or a wireless switch. The AP is an access point by using which the Wi-Fi device enters a wired network, and is mainly used for deployment of home broadband networks and intranets and the like. The Wi-Fi device may access an AP through Wi-Fi, so as to access the Wi-Fi network.

In the network architecture shown in FIG. 1, the Wi-Fi device may access the network by using an AP. When having network access permission of mutually accessing peer devices, Wi-Fi devices may establish a communication connection through Wi-Fi, thereby implementing secure communication. The network architecture shown in FIG. 1 provides only a part of a connection relationship. In an actual application, a connection relationship between the Wi-Fi devices in the Wi-Fi network is much more complex. This is not limited in this embodiment of the present invention. In the Wi-Fi network, each Wi-Fi device may be referred to as a station device. A station device having configuration information permission for configuring each Wi-Fi device may be referred to as a configuration device, and a station device having an AP function may be referred to as an AP device.

It should be noted that, the architecture of the Wi-Fi network in FIG. 1 is merely one of network architectures supported by a Wi-Fi technology, namely, an AP-station STA mode. This embodiment of the present invention may also be applicable to a WLAN network, a P2P network, and a NAN in which communication is established by using the Wi-Fi technology, a network using a group owner (Group Owner, GO) in a Wi-Fi P2P network as a central node, and the like. A network architecture using the GO as a center is similar to a network architecture using an AP as a center. The GO is merely used for constructing a network in a short time and used as a central node of a network. The AP is usually used as a central node of a network for a long time, and is usually applied to a home network. In the P2P network and the NAN network, a concept of an AP does not exist. All Wi-Fi devices are mutually connected through Wi-Fi directly, so as to perform communication.

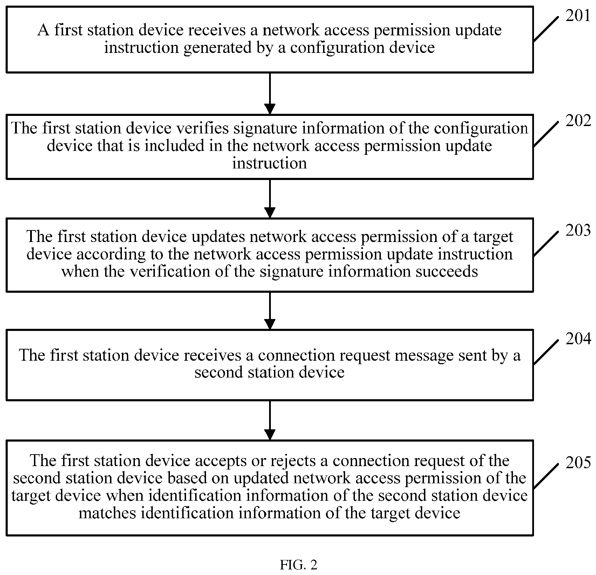

Based on the architecture of the Wi-Fi network shown in FIG. 1, an embodiment of the present invention discloses a network access permission management method. Referring to FIG. 2, FIG. 2 is a schematic flowchart of the network access permission management method according to this embodiment of the present invention. As shown in FIG. 2, the network access permission management method includes the following steps.

201. A first station device receives a network access permission update instruction generated by a configuration device.

In this embodiment of the present invention, the first station device is any device in the Wi-Fi network. The station device may be a device having an AP function or an ordinary station device. This is not limited in this embodiment of the present invention. The configuration device may include, but is not limited to, a configurator (Configurator), another station device in the Wi-Fi network, or a device approved or trusted by all other station devices. The configurator is usually a management device in the Wi-Fi network and configures and/or manages the Wi-Fi network, such as a smartphone with a camera, a tablet computer, or another Wi-Fi terminal that can perform network configuration and/or management in the Wi-Fi network. This is not limited in this embodiment of the present invention. The configuration device may generate the network access permission update instruction after being triggered by a user, or may generate the network access permission update instruction after receiving a request sent by another station device in the Wi-Fi network. The request sent by the another station device may also be triggered and generated by a user. A time point for the configuration device to generate the network access permission update instruction is not limited. This is not limited in this embodiment of the present invention.

In this embodiment of the present invention, after generating the network access permission update instruction, the configuration device sends the network access permission update instruction to at least one station device in the Wi-Fi network. After receiving the network access permission update instruction, the station device may further forward the network access permission update instruction to another station device. Therefore, the first station device receives a network access permission update instruction sent by the configuration device or may receive a network access permission update instruction forwarded by another station device in the Wi-Fi network. This is not limited in this embodiment of the present invention.

In this embodiment of the present invention, the network access permission update instruction is used to instruct to update network access permission of a target device. The network access permission update instruction may be specifically a network access permission revoking instruction used to revoke the network access permission of the target device in the Wi-Fi network, or may be a network access permission modification instruction used to modify the network access permission of the target device. Specifically, the network access permission of the target device may be modified from being able to connect to only some devices in the Wi-Fi network to being able to connect to all devices in the Wi-Fi network. Alternatively, the network access permission of the target device may be modified from being able to connect to all devices in the Wi-Fi network to being able to connect to only some devices in the Wi-Fi network. This is not limited in this embodiment of the present invention.

In this embodiment of the present invention, a form of the network access permission update instruction maybe: {

```
DeviceID1: Identification information of the target device
         Signature: Signature information of the configuration device
```

}The target device, that is, a device whose network access permission is to be revoked or modified, may be a station device, a device of a type, or one or more devices in the Wi-Fi network that are specified by the user. Therefore, the identification information of the target device may be a device name, an ID, a public key, a physical address or a hardware address (Media Access Control, MAC address), or the like of the target device, or may indicate a device type such as a mobile phone type. This is not limited in this embodiment of the present invention.

The signature information of the configuration device is generated by the configuration device, and is used to prove that the network access permission update instruction is a valid instruction. That is, the device generating the signature information is a device that can update the network access permission. The signature information may be generated by the configuration device by using an encryption algorithm and a private key of the configuration device.

The configuration device is a device that generates the network access permission update instruction and that signs the instruction to generate the signature information. The identification information of the configuration device is used to indicate the configuration device, and may specifically be a device name, a device ID, a device public key, a MAC address, or a device type. The configuration device may be a network configurator, an AP in the network or a device of another type. This is not limited in this embodiment of the present invention. When the network access permission update instruction does not include an identifier of the configuration device, it usually indicates that the instruction is generated and signed by a default configuration device in the network.

202. The first station device verifies signature information of the configuration device that is included in the network access permission update instruction.

In this embodiment of the present invention, after receiving the network access permission update instruction, the first station device verifies the signature information of the configuration device, which may include verifying whether the signature information is complete and whether a signature is generated by an authenticated device, thereby verifying authenticity, completeness, and validity of the network access permission update instruction. Specifically, the signature information may be verified by using a public key of the configuration device, where the public key is determined based on the identification information of the configuration device that is included in the network access permission update instruction. Alternatively, the signature information may be verified by using a default public key, for example, a public key of a default configuration device or of a default device trusted by other devices. Further, alternatively and not forming part of the present invention, after it is determined, based on the identification information of the configuration device, that the configuration device is completely trusted, the signature information is not verified. This is not limited in this embodiment of the present invention.

Therefore, if the verification of the signature information succeeds, it indicates that the update instruction is valid, that is, the configuration device is determined as a trusted device. In this way, the first station device responds to the network access permission update instruction, to update the network access permission of the target device. If the verification of the signature information fails, it indicates that the update instruction is invalid. Therefore, the first station device may ignore the network access permission update instruction. If the configuration device is to be trusted by the first station device, the first station device may be preconfigured with information about the configuration device, or may obtain information about the configuration device in another manner and trust the configuration device. This is not limited in this embodiment of the present invention.

203. The first station device updates network access permission of a target device according to the network access permission update instruction when the verification of the signature information succeeds.

In this embodiment of the present invention, the first station device updates the network access permission of the target device according to the network access permission update instruction when the verification of the signature information succeeds.

Specifically, that the first station device updates the network access permission of the target device may be understood as: Regardless of whether the first station device stores the network access permission of the target device, the first station device saves the network access permission of the target device that is indicated by the network access permission update instruction.

Further, if the first station device stores historical network access permission of the target device, the first station device deletes or modifies the historical network access permission according to an indication of the network access permission update instruction. If the network access permission of the target device that needs to be modified and that is indicated by the network access permission update instruction is unrelated to the first station device, the first station device may also save the network access permission update instruction, to forward the network access permission update instruction to another device subsequently.

For example, it is assumed that historical network access permission of a mobile phone A can connect to any device in the Wi-Fi network, a network access permission update instruction is used to instruct to change the network access permission of the mobile phone A to being able to connect to no device. When receiving the network access permission update instruction for the mobile phone A, a tablet computer in the Wi-Fi network changes a network access permission of the mobile phone A from previous connection allowed to connection rejected.

In a feasible implementation, a specific manner of the updating, by the first station device, network access permission of a target device may be:
updating the network access permission of the target device when the network access permission update instruction satisfies an update condition.

The update condition may include at least one of the following conditions:
(1) The network identifier is consistent with a network identifier of a network in which the first station device is located.
(2) The network access permission update instruction further includes identification information of an update-executing device. The identification information of the update-executing device includes identification information of the first station device, and the update-executing device is at least one device in the Wi-Fi network.
(3) The network access permission update instruction further includes a first generation time. The first generation time is later than a second generation time, the first generation time is used to indicate a generation time of the network access permission update instruction, and the second generation time is a generation time of a network access permission instruction corresponding to historical network access permission of the target device that is recorded by the first station device.

It should be noted that, when any one or more of the foregoing three update conditions are satisfied and the verification of the signature information succeeds, the first station device may update the network access permission of the target device.

For (1), the network access permission update instructionincludes the network identifier of the network in which the target device is located, that is, a network for which the network access permission of the target device needs to be updated. The network identifier may be a service set identifier (Service Set Identifier, SSID), an extended service set identifier (Extended Service Set Identifier, ESSID), another ID, or the like of the Wi-Fi network, provided that uniqueness of the network can be identified.

Optionally, if the network access permission update instruction does not include the network identifier, it can be considered that the network access permission update instruction is updated for a default network.

Therefore, after receiving the network access permission update instruction, the first station device first verifies the signature information, and then may determine, after the verification of the signature information succeeds, whether the network identifier is consistent with the network identifier of the network in which the first station device is located, that is, determining whether the first station device and the target device are in a same Wi-Fi network. Alternatively, the first station device may first determine the network identifier and then verify the signature information, or verify the signature information and determine the network identifier simultaneously. If the verification of the signature information succeeds and the network identifier is consistent with the network identifier of the network in which the first station device is located, the first station device updates the network access permission of the target device according to the network access permission update instruction.

Based on verification of consistency of the network identifiers, a device in the Wi-Fi network can be purposely instructed to update the network access permission of the target device, thereby avoiding invalid sending of the network access permission update instruction, and ensuring, to some extent, communication security between devices in the Wi-Fi network that need to update the network access permission.

For (2), the network access permission update instruction may further include the identification information of the update-executing device. The update-executing device is a station device in the network that needs to update the network access permission of the target device. The update-executing device may be one or more types of devices in the Wi-Fi network or one or more devices in the Wi-Fi network. In this case, the identification information of the update-executing device may include identification information of one device, identification information of a plurality of devices, device type identification information of a device of a type, or identification information of all devices in the Wi-Fi network (in this case, all the devices in the Wi-Fi network may be represented by a wildcard character or in a default manner). This is not limited in this embodiment of the present invention.

Therefore, when verifying the signature information, the first station device may further determine whether the identification information includes the identification information of the first station device. When the identification information of the update-executing device includes device type identification information of a device of a type, the first station device determines whether a device type of the first station device is included in the device type identification information. If the identification information of the first station device or a type identifier of the first station device is included, it indicates that the first station device needs to update the network access permission of the target device, and the first station device updates the network access permission of the target device when the verification of the signature information succeeds. If the identification information of the first station device or a type identifier of the first station device is not included, it indicates that the network access permission update instruction is unrelated to the first station device. Therefore, the first station device may ignore the network access permission update instruction, or simply save the network access permission update instruction to forward the network access permission update instruction when communicating with another device subsequently. This is not limited in this embodiment of the present invention. Likewise, the signature information may be verified before or after the identification information is determined, or the two operations may be performed simultaneously.

For (3), the network access permission update instruction may further include the first generation time of the instruction. The first station device may store historical network access permission of each device in the Wi-Fi network. The historical network access permission may record identification information of a corresponding device, a network identifier of the Wi-Fi network, and the second generation time of the network access permission instruction corresponding to the historical network access permission.

Therefore, when verifying the signature information, the first station device may determine whether historical network access permission corresponding to the identification information of the target device exists. If the historical network access permission exists, the first station device may obtain a second generation time of a network access permission instruction corresponding to the historical network access permission, and compare the first generation time and the second generation time. If the historical network access permission does not exist, the first station device may perform no operation, or simply save the network access permission update instruction to forward the network access permission update instruction when communicating with another station device subsequently. This is not limited in this embodiment of the present invention.

It should be noted that, the second generation time of the network access permission instruction corresponding to the historical network access permission may be understood as a network access permission instruction indicating the network access permission of the target device and a time point of generating the instruction. Meanwhile, the historical network access permission may further include identification information of a device generating the network access permission instruction corresponding to the historical network access permission, that is, a device generating the network access permission instruction to indicate the network access permission of the target device.

Further, if the historical network access permission of the target device has been stored, the first station device may first determine, directly through comparison, whether the two types of network access permission are the same. Alternatively, a hash value of a digest of the historical network access permission and a hash value of a digest of the network access permission of the target device that is indicated by the network access permission update instruction may be calculated. If the two hash values are the same, it indicates that the historical network access permission is the same as the current network access permission. If the hash values are different, it indicates that the historical network access permission is different from the current network access permission. The first station device needs to further determine a chronological order of generating instructions corresponding to the two types of network access permission, and finally save network access permission of the target device that is indicated by a network access permission instruction closest to a current time.

Therefore, when determining that the historical network access permission is inconsistent with the current network access permission, the first station device compares time points of generating the instructions corresponding to the two types of network access permission. If the second generation time is closer to the current time, it indicates that the historical network access permission is newly indicated network access permission of the target device. Therefore, the first station device uses the historical network access permission and ignores the network access permission update instruction. If the first generation time is closer to the current time, after the verification of the signature information succeeds, the first station device updates the network access permission of the target device. In this way, effectiveness of a plurality of network access permission update instructions for a same target device can be distinguished, and a newly generated network access permission update instruction can be used as a reference, thereby avoiding a case that is caused by repetitive network access permission update or an update conflict and in which some devices cannot modify the network access permission of the target device according to the network access permission update instruction in a timely manner.

For example, assuming that a mobile phone B is lost, the configuration device generates, at 14:00, a first instruction for revoking network access permission of the mobile phone B for all devices in a home network A. Later, the mobile phone B is found back. The configuration device generates, at 17:30 on the same day, a second instruction for restoring the network access permission of the mobile phone B for all the devices in the home network A. It is assumed that a mobile phone E receives the second instruction at 21:00 and modifies the access permission of the mobile phone B, and then receives the first instruction at 21:40. The mobile phone E can determine, based on determining of the time points of generating the two instructions, whether the mobile phone B is allowed or forbidden to connect to the mobile phone E. In this way, effectiveness of the network access permission of the mobile phone B that is indicated by each instruction can be clearer.

In another feasible implementation, a specific manner of the updating, by the first station device, network access permission of a target device may be alternatively:
when the network access permission update instruction is a network access permission revoking instruction and the verification of the signature information succeeds, deleting, according to the network access permission revoking instruction, historical network access permission of the target device that is recorded by the first station device; or
when the network access permission update instruction is a network access permission modification instruction and the verification of the signature information succeeds, modifying the historical network access permission according to the network access permission modification instruction.

During specific implementation, when the network access permission update instruction is the network access permission modification instruction, the modification instruction may be lowering or improving the network access permission of the target device. This is not limited in this embodiment of the present invention.

Optionally, the first station device may further update the network access permission of the target device by using a mechanism similar to a blacklist or a whitelist. That is, a device that can be connected to the first station device may be recorded and added to a whitelist, and a device whose network access permission is deleted is added to a blacklist. Herein, a mobile phone of Bob is used as an example. The mobile phone of Bob may not be in a blacklist of a mobile phone of Tom previously, and now is added to the blacklist. Subsequently, when the mobile phone of Bob initiates a connection to the mobile phone of Tom, the mobile phone of Tom detects that the mobile phone of Bob is in the blacklist and rejects the connection. If the mobile phone of Bob is in a whitelist of the mobile phone of Tom, after receiving the network access permission update instruction, the mobile phone of Tom deletes the mobile phone of Bob from the whitelist. Subsequently, when the mobile phone of Bob initiates a connection, the mobile phone of Tom rejects the connection because the mobile phone of Bob is not in the whitelist. This is merely an example herein, and other examples may also be used provided that the device receiving the network access permission update instruction can limit connection and access of a device according to the received network access permission update instruction.

204. The first station device receives a connection request message sent by a second station device.

In this embodiment of the present invention, the second station device is any device other than the first station device in the Wi-Fi network, and may be the target device, the configuration device, or another station device in the Wi-Fi network. This is not limited in this embodiment of the present invention.

Therefore, after the first station device updates the network access permission of the target device, if receiving the connection request message sent by the second station device, the first station device may determine, based on connection information carried in the connection request message, whether the second station device expects to connect to the first station device. If the second station device expects to connect to the first station device, the first station device obtains, from the connection request message, identification information of the second station device, and then searches for identification information that matches the identification information of the second station device, thereby determining network access permission corresponding to the identification information. That is, in the Wi-Fi network, if a device A needs to connect to a device B, the device A may send the connection request message in the Wi-Fi network through broadcast, unicast, or multicast. When determining that the device A needs to establish a connection to the device B, the device B determines, according to network access permission of the device A, whether to accept or reject a connection request of the device A.

205. The first station device accepts or rejects a connection request of the second station device according to updated network access permission of the target device when identification information of the second station device matches identification information of the target device.

It may be understood that, identification information matching may be understood as: A device type marked by the identification information stored by the first station device includes a device type of the second station device. Alternatively, a device marked by the stored identification information is the second station device, but the two pieces of identification information are different. For example, a MAC address of the second station device is stored, and the connection request message includes a device name of the second station device. For another example, identification information of a mobile phone type is stored, and a device type of the second station device is a mobile phone type.

In this embodiment of the present invention, if the first station device determines that the identification information of the second station device matches the identification information of the target device, the first station device may respond to the connection request message based on the updated access permission of the target device.

According to the invention, a specific manner of the accepting or rejecting, by the first station device, a connection request of the second station device according to updated network access permission of the target device is:
accepting or rejecting the connection request of the second station device according to the updated network access permission of the target device when the network identifier is consistent with a network identifier of a network in which the second station device is located.
In specific implementations not forming part of the present invention, a specific manner of the accepting or rejecting, by the first station device, a connection request of the second station device according to updated network access permission of the target device may be: accepting or rejecting the connection request of the second station device according to the updated network access permission of the target device when the network access permission update instruction further includes time information of the network access permission and a current time falls within a time range indicated by the time information; or
accepting or rejecting the connection request of the second station device according to the updated network access permission of the target device when the network access permission update instruction further includes the time information, the network identifier is consistent with a network identifier of a network in which the second station device is located, and a current time falls within a time range indicated by the time information.

During specific implementation, the network access permission update instruction may further include the network identifier of the network in which the target device is located. In this case, the updated network access permission of the target device also correspondingly includes the network identifier. When the identification information of the second station device matches the identification information of the target device, although the first station device can determine that the second station device is the target device, the network in which the second station device is located may be different from the Wi-Fi network indicated by the network access permission update instruction. Therefore, the first station device needs to determine whether the network identifier is consistent with the network identifier of the network in which the second station device is located. If they are consistent, the first station device can respond to the connection request message according to the updated network access permission of the target device. If they are inconsistent, the first station device can simply respond to the connection request message based on the network access permission of the second station device that is in the network identifier of the network in which the second station device is located.

For example, a mobile phone A and a mobile phone B can connect to a home network and a corporate network, and the mobile phone A can connect to the mobile phone B in both the home network and the corporate network. Assuming that the user needs to modify network access permission of the mobile phone A in the home network, the mobile phone B is instructed to not allow the mobile phone A to connect to the mobile phone B in the home network. If the mobile phone A sends a connection request message to the mobile phone B, the mobile phone B needs to determine whether a network identifier of a network in which the mobile phone A is currently located is a network identifier of the home network. Assuming that the network in which the mobile phone A is currently located is the corporate network, the mobile phone B accepts a connection request of the mobile phone A and establishes a connection to the mobile phone A. Assuming that the network in which the mobile phone A is currently located is the home network, the mobile phone B refuses a connection request of the mobile phone A.

During specific implementations not forming part of the present invention, the network access permission update instruction may further include the time information of the network access permission. The time information may be in a time window form, and used to limit a time period in which the target device accesses the network or connects to a device in the network. In this case, the network access permission of the target device that is updated by the first station device also correspondingly includes the time information. Specifically, if the network access permission update instruction indicates that the target device cannot access the network, the time information indicates that the target device cannot access the network in a specific specified time period. If the network access permission update instruction indicates that the target device can connect to some devices, the time information indicates that the target device can connect to some devices only in a specific specified time period.

Therefore, the time information may be several time periods such as one or more specified time periods in one or more specified days, or may be a continuous period of time such as starting from a time point on a day, or may be a periodic time period such as one or more time periods every day or starting from a time point every day. The time information may be a relative time period or may be an absolute time period. This is not limited in this embodiment of the present invention.

Therefore, when the first station device receives the connection request message of the second station device, and the identification information of the second station device matches the identification of the target device, the first station device further obtains the time information corresponding to the updated network access permission of the target device, so as to determine whether the current time falls within a time range indicated by the time information. If the current time falls within the time range, the first station device may respond to the connection request of the second station device according to the updated network access permission of the target device. In this way, the network access permission of the target device can be more finely limited.

For example, it is assumed that the network access permission update instruction indicates that a tablet computer E cannot connect to a refrigerator B and an air conditioner F in a home network from 9:00 to 18:00 every Monday to Friday. After receiving a connection request message of the tablet computer E, the air conditioner F may further obtain a current time (assuming that the current time is 14:00 on Tuesday), and determine that the current time falls within a time range of network access permission of the tablet computer E. In this case, the air conditioner F rejects a connection request of the tablet computer E. If the current time is 21:00 on Wednesday, the air conditioner F may determine that the current time falls out of a time range in which the air conditioner F cannot be connected. Therefore, the air conditioner F accepts a connection request of the tablet computer E and establishes a connection to the tablet computer E.

During specific implementations not forming part of the present invention, the network access permission update instruction may further include both the network identifier of the target device and the time information. In this case, the network access permission of the target device that is updated by the first station device also includes the network identifier and the time information. Therefore, when determining that the network identifier is consistent with the network identifier of the network in which the second station device is located, the first station device responds to the connection request of the second station device based on the time information included in the updated network access permission of the target device.

In another feasible implementation, the network access permission update instruction may further include network access permission update content. The network access permission update content may specifically include identification information of a peer device, and the network access permission update content is used to indicate whether the peer device allows or forbids the target device to connect to the peer device. Therefore, a specific manner of the accepting or rejecting, by the first station device, a connection request of the second station device according to updated network access permission of the target device may be alternatively:
accepting, by the first station device, the connection request of the second station device according to the updated network access permission of the target device when the network access permission update content indicates that the peer device allows the target device to connect to the peer device and the identification information of the peer device includes the identification information of the first station device; or
rejecting, by the first station device, the connection request of the second station device according to the updated network access permission of the target device when the network access permission update content indicates that the peer device forbids the target device to connect to the peer device and the identification information of the peer device includes identification information of the first station device.

Specifically, the network access permission update instruction may further include the network permission update content, for example, one or more of network access permission updates such as forbidding the target device to connect to a device, allowing the target device to connect to a device, allowing or forbidding the target device to connect to a device in a limited time period, re-allowing the target device to connect to a device or modifying a to-be-connected device, or other network access permission modification content used to indicate specific modification content of the access permission of the target device. In this case, the peer device is a station device that needs to limit the target device to connect to the station device.

That is, assuming that the first station device does not allow the target device to connect to the first station device previously, if the updated network access permission of the target device is being able to connect to the first station device, the first station device responds to the connection request message, and returns a response message indicating connection allowed, to accept the connection request of the second station device. Assuming that the first station device allows the target device to connect to the first station device previously, if the updated network access permission of the target device is forbidding to connect to the first station device, the first station device may not respond to the connection request message, or may return a response message indicating connection rejected, to reject the connection request of the second station device.

Further, the network access permission update content may further be defaulted. That is, the network access permission update instruction does not include the specific network access permission modification instruction. Once the permission changes, the network access permission of the target device is directly deleted. This is not limited in this embodiment of the present invention.

It should be noted that, usually, the update-executing device and the peer device include same devices. That is, a device that needs to update the network access permission of the target device is a device that needs to limit the target device to connect to the device. However, the update-executing device and the peer device may include partly different devices. For example, all devices in the Wi-Fi network need to update the network access permission of the target device, and only some devices in the Wi-Fi network need to limit the target device to connect to the devices. Therefore, the update-executing device and the peer device may include same devices or partly different devices.

It can be learned that in the method in FIG. 2, the configuration device generates the network access permission update instruction for the target device, and the network access permission update instruction may be for revoking the access permission of the target device in the Wi-Fi network or modifying the access permission of the target device in the Wi-Fi network. In this case, when a device receives the network access permission update instruction, and the verification of the signature information of the configuration device succeeds, the device updates the network access permission of the target device. The target device sends the connection request to the device and the device determines, according to the updated network access permission, whether to accept or reject the connection request of the target device. According to this embodiment of the present invention, the user may modify, based on a requirement, network access permission of any device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network. Further, the network access permission update instruction includes the network identifier of the network in which the target device is located, and may further include the instruction generation time, and the identification information of the update-executing device. In this case, after receiving the network access permission update instruction, the first station device may further determine, based on the foregoing information, whether the network identifier of the target device needs to be updated, so as to avoid repetitive network access permission update. In this way, network access permission update can be more targeted, thereby improving efficiency of updating the network access permission by each device in the Wi-Fi network.

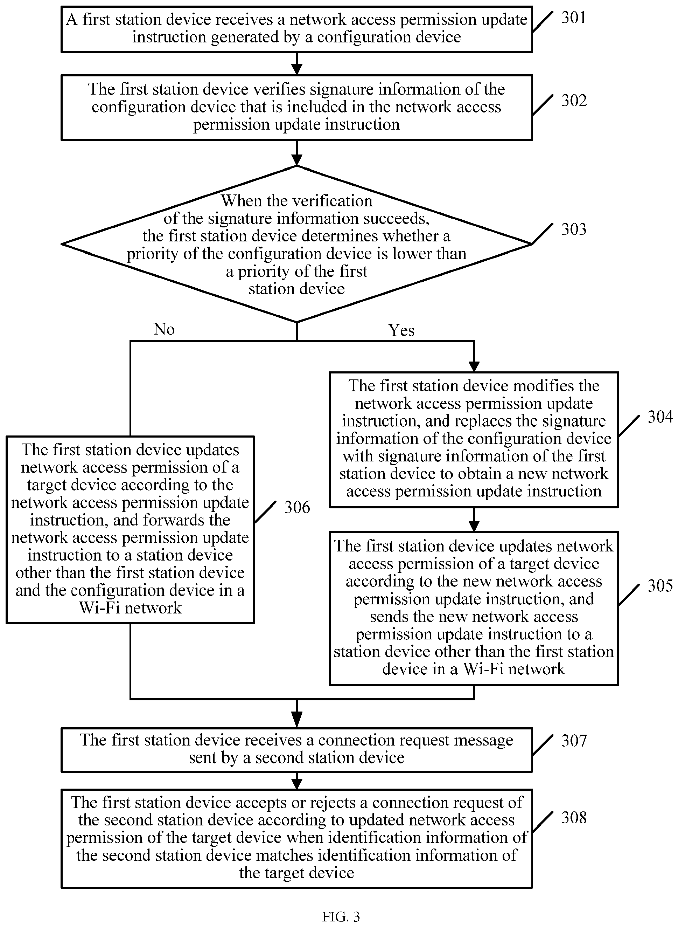

Based on the architecture of the Wi-Fi network shown in FIG. 1, an embodiment of the present invention discloses another network access permission management method. Referring to FIG. 3, FIG. 3 is a schematic flowchart of the another network access permission management method not forming part of the present invention. As shown in FIG. 3, the network access permission management method may include the following steps.

301. A first station device receives a network access permission update instruction generated by a configuration device.

302. The first station device verifies signature information of the configuration device that is included in the network access permission update instruction.

Step 301 and step 302 are the same as step 201 and step 202 shown in FIG. 2, and details are not described again in this embodiment of the present invention.

303. When the verification of the signature information succeeds, the first station device determines whether a priority of the configuration device is lower than a priority of the first station device. If the priority of the configuration device is lower than the priority of the first station device, perform step 304 and step 305. If the priority of the configuration device is higher than the priority of the first station device, perform step 306.

In this embodiment of the present invention, a priority of a device may be understood as that whether the device has higher authority in the Wi-Fi network. For example, if a configurator has higher reliability and higher authority than a secondary configurator in a same Wi-Fi network, a priority of the configurator is higher than a priority of the secondary configurator. Therefore, the configurator can modify, based on an actual situation, an instruction generated by the secondary configurator.

Therefore, when the first station device receives the network access permission generated by the configuration device and the verification of the signature information succeeds, the first station device may obtain the priority of the configuration device, and then determine whether the priority of the configuration device is lower than the priority of the first station device.

If the priority of the configuration device is lower than the priority of the first station device, the first station device can modify the network access permission update instruction. On the contrary, if the priority of the configuration device is higher than the priority of the first station device, the first station device can simply update the network access permission of the target device according to the network access permission update instruction. For example, the configuration device generating the network access permission update instruction may be a mobile phone having relatively high reliability in the Wi-Fi network. When receiving the network access permission update instruction, the configurator may modify the network access permission update instruction.

304. The first station device modifies the network access permission update instruction, and replaces the signature information of the configuration device with signature information of the first station device, to obtain a new network access permission update instruction.

In this embodiment of the present invention, when modifying the network access permission update instruction, the first station device mainly modifies the network access permission of the target device. For example, a current network access permission update instruction indicates that a notebook computer C can connect to only a refrigerator in a home network. After receiving the network access permission update instruction, the configurator determines that a priority of a device generating the instruction is lower than a priority of the configurator, and the configurator expects the notebook computer C may further connect to an air conditioner in the home network. Therefore, the network access permission update instruction may be changed to being able to connect to the refrigerator and the air conditioner in the home network.

Further, after modifying the network access permission update instruction, the first station device needs to provide the signature information of the first station device for the modified instruction, thereby generating the new network access permission update instruction. It is assumed that some devices first receive the network access permission update instruction generated by the configuration device, and then receive the network access permission update instruction generated by the first station device. In this way, it can be determined, based on the signature information, that the priority of the first station device is higher than the priority of the configuration device, thereby updating the network access permission of the target device according to the network access permission update instruction generated by the first station device.

305. The first station device updates network access permission of a target device according to the new network access permission update instruction, and sends the new network access permission update instruction to a station device other than the first station device in the Wi-Fi network.

In this embodiment of the present invention, the first station device may update, after modifying the network access permission update instruction, the network access permission of the target device according to the new network access permission update instruction. Further, the first station device may send the new network access permission update instruction when subsequently communicating with another device.

Specifically, the first station device may send the new network access permission update instruction individually to the station device other than the first station device in the Wi-Fi network, or may add the new network access permission update instruction when communicating with another device other than the first station device in the Wi-Fi network, for example, when sending a DPP discovery message. Alternatively, the first station device may send the new network access permission update instruction by using a DPP configuration message or another independent message that can carry the network access permission update instruction, or may send the new network access permission update instruction by including the new network access permission update instruction in another message. This is not limited in this embodiment of the present invention.

Further, if the first station device needs to modify the network access permission update instruction, the first station device may further update, as a generation time of the new network access permission update instruction, a time point of modifying the network access permission update instruction.

306. The first station device updates network access permission of a target device according to the network access permission update instruction, and forwards the network access permission update instruction to a station device other than the first station device and the configuration device in the Wi-Fi network.

In this embodiment of the present invention, the first station device may forward the network access permission update instruction to one or more devices in the Wi-Fi network. This is not limited in this embodiment of the present invention. Usually, the first station device may forward the network access permission update instruction to any device other than the first station device in the Wi-Fi network. However, to avoid repetitive instruction receiving, the first station device may not forward the network access permission update instruction to the configuration device in the Wi-Fi network.

During specific implementation, a specific manner of the forwarding, by the first station device, the network access permission update instruction to a station device other than the first station device and the configuration device in the Wi-Fi network may be as follows:

The first station device sends a DPP discovery message to the station device other than the first station device and the configuration device in the Wi-Fi network. The DPP discovery message carries the network access permission update instruction. Alternatively, the first station device sends the network access permission update instruction by using a DPP configuration message or another independent message that can carry the network access permission update instruction, or may send the network access permission update instruction by including the network access permission update instruction in another message.

Specifically, the first station device may add the network access permission update instruction to the connection request message when sending the connection request message to another device in the Wi-Fi network, may add the network access permission update instruction to a response after receiving a connection request message of another device in the Wi-Fi network, may send the network access permission update instruction individually to the other party after establishing a connection, or may directly broadcast the network access permission update instruction in the network. For example, an AP device may periodically broadcast a network access permission update instruction of each device. After receiving the update instruction, a station device updates network access permission of a corresponding device.

It may be understood that, alternatively, the first station device may receive the network access permission update instruction by using a DPP discovery message, a connection request message sent by another device, or a message broadcast by an AP device. If the first station device is a device having a configuration function, the network access permission update instruction may also be forwarded by using a DPP configuration message.

Further, the first station device may alternatively forward the network access permission update instruction after receiving an indication indicating that the network access permission update instruction needs to be forwarded. If no indication is received, the network access permission update instruction is not forwarded.

Further, the first station device may further forward the network access permission update instruction to a particular device in the Wi-Fi network. The particular device is an update-executing device included in the network access permission update instruction. Such targeted forwarding can improve efficiency of revoking or modifying the network access permission of the target device.

If a device is lost, network access permission of the device needs to be revoked. In this way, the configuration device needs to configure only some devices instead of all devices in the Wi-Fi network, thereby improving efficiency of revoking or modifying network access permission of a device.

In a feasible implementation, when forwarding the network access permission update instruction to a device, the first station device may record a time of forwarding the instruction to the device. Therefore, a specific manner of the forwarding, by the first station device, the network access permission update instruction may include the following steps.

(11) The first station device determines whether the network access permission update instruction has been forwarded to a third station device.

(12) If no network access permission update instruction has been forwarded to the third station device, the first station device forwards the network access permission update instruction to the third station device, and marks the third station device as an already-forwarded-to device.

During specific implementation, usually, the third station device may be any station device other than the first station device in the Wi-Fi network, and may be the configuration device, the target device, or another station device. Before the first station device sends the connection request message to the third station device or responds to a connection request message of the third station device, the first station device may determine whether the third station device is marked as an already-forwarded-to device for the network access update instruction. If the third station device has not been marked, the first station device may add the network access permission update instruction when sending the connection request message to the third station device or responding to the connection request message of the third station device. If the third station device has been marked, the first station device no longer forwards the network access permission update instruction to the third station device, thereby avoiding repetitive information sending.

307. The first station device receives a connection request message sent by a second station device.

Step 307 is the same as step 204 shown in FIG. 2, and details are not described again in this embodiment of the present invention.

308. The first station device accepts or rejects a connection request of the second station device according to updated network access permission of the target device, and terminates this procedure.

Step 308 is the same as step 205 shown in FIG. 2, and details are not described again in this embodiment of the present invention.

It can be learned that in the method in FIG. 3, when the configuration device generates network access permission of the target device, a time range of the network access permission may be included, so that the network access permission of the target device can be more accurately and effectively limited, thereby ensuring communication security of the Wi-Fi network. Further, if a device in the Wi-Fi network has higher reliability than the configuration device in the network, the device may modify the network access permission of the target device that corresponds to the network access permission update instruction generated by the configuration device, thereby preventing an unauthorized user from randomly modifying network access permission of any device in the Wi-Fi network by using a network access permission update instruction generated by the configuration device, and improving communication security of the Wi-Fi network.

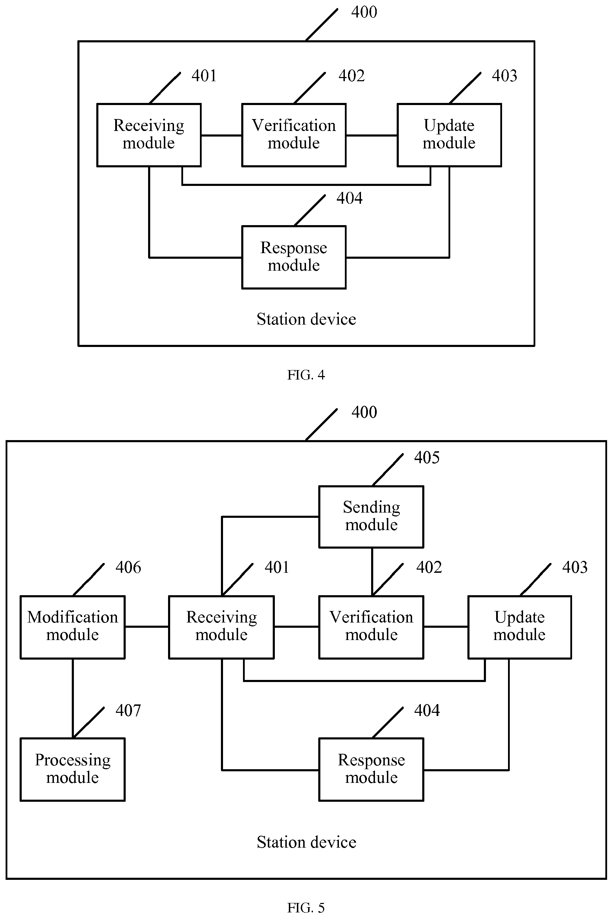

Based on the architecture of the Wi-Fi network shown in FIG. 1, an embodiment of the present invention discloses a station device. Referring to FIG. 4, FIG. 4 is a schematic structural diagram of the station device according to this embodiment of the present invention. As shown in FIG. 4, the station device 400 includes a receiving module 401, a verification module 402, an update module 403, and a response module 404.

The receiving module 401 is configured to receive a network access permission update instruction generated by a configuration device in the Wi-Fi network. The network access permission update instruction is used to instruct to update network access permission of a target device in the Wi-Fi network, and the network access permission update instruction includes identification information of the target device and signature information of the configuration device

The network access permission update instruction further includes a network identifier of a network in which the target device is located.

The verification module 402 is configured to verify the signature information.

The update module 403 is configured to update the network access permission of the target device according to the network access permission update instruction when the verification of the signature information by the verification module 402 succeeds.

In a feasible implementation, a specific manner of the updating, by the update module 403, the network access permission of the target device according to the network access permission update instruction when the verification of the signature information by the verification module 402 succeeds may be:
updating the network access permission of the target device according to the network access permission update instruction when the network access permission update instruction satisfies an update condition and the verification of the signature information by the verification module succeeds.

The update condition may include at least one of the following conditions:

The network identifier is consistent with a network identifier of a network in which the station device 400 is located. A step of determining the network identifier is added, so that network access permission update is more targeted, thereby improving the security of the Wi-Fi network.

The network access permission update instruction further includes identification information of an update-executing device. The identification information of the update-executing device includes identification information of the station device 400. The update-executing device is at least one device that is to update the network access permission of the target device in the Wi-Fi network. In this way, network access permission update is more targeted, thereby improving efficiency of updating network access permission of a device in the Wi-Fi network.

The network access permission update instruction further includes a first generation time. The first generation time is later than a second generation time, the first generation time is used to indicate a generation time of the network access permission update instruction, and the second generation time is a generation time of a network access permission instruction corresponding to historical network access permission of the target device that is recorded by the station device 400. A generation time is added to a network access permission update instruction, so that effectiveness of a plurality of network access permission update instructions for a same target device can be distinguished, and a newly generated network access permission update instruction can be used as a reference, thereby avoiding repetitive network access permission update or an update conflict.

In another feasible implementation, a specific manner of the updating, by the update module 403, the network access permission of the target device according to the network access permission update instruction when the verification of the signature information by the verification module 402 succeeds may be:
when the network access permission update instruction is a network access permission revoking instruction and the verification of the signature information by the verification module 402 succeeds, deleting, according to the network access permission revoking instruction, historical network access permission of the target device that is recorded by the station device 400; or
when the network access permission update instruction is a network access permission modification instruction and the verification of the signature information by the verification module 402 succeeds, modifying the historical network access permission according to the network access permission modification instruction.

The receiving module 401 is further configured to receive a connection request message sent by a second station device. The second station device is any device other than the station device 400 in the Wi-Fi network.

The response module 404 is configured to accept or reject a connection request of the second station device according to updated network access permission of the target device when identification information of the second station device matches the identification information of the target device.

According to the present invention, a specific manner of the accepting or rejecting, by the response module 404, a connection request of the second station device according to updated network access permission of the target device when identification information of the second station device matches the identification information of the target device is:
accepting or rejecting the connection request of the second station device according to the updated network access permission of the target device when the network identifier is consistent with a network identifier of a network in which the second station device is located, and the identification information of the second station device matches the identification information of the target device.
Specific manners not forming part of the present invention, of the accepting or rejecting, by the response module 404, a connection request of the second station device according to updated network access permission of the target device when identification information of the second station device matches the identification information of the target device may be: accepting or rejecting the connection request of the second station device according to the updated network access permission of the target device when the network access permission update instruction further includes time information of the network access permission, a current time falls within a time range indicated by the time information, and the identification information of the second station device matches the identification information of the target device; or
accepting or rejecting the connection request of the second station device according to the updated network access permission of the target device when the network access permission update instruction further includes the time information, the network identifier is consistent with a network identifier of a network in which the second station device is located, and a current time falls within a time range indicated by the time information.

When the connection request of the second station device is accepted or rejected according to the updated network access permission of the target device, a step of determining at least one of the network identifier and the time information of the network access permission is added. In this way, network access permission update can be more targeted, and the network access permission of the target device can be more finely limited, thereby improving the security of the Wi-Fi network.

In still another feasible implementation, the network access permission update instruction may further include network access permission update content. The network access permission update content may specifically include identification information of a peer device, and the network access permission update content is used to indicate whether the peer device allows or forbids the target device to connect to the peer device. Therefore, a specific manner of the accepting or rejecting, by the response module 404, a connection request of the second station device according to updated network access permission of the target device when identification information of the second station device matches the identification information of the target device may be:
accepting the connection request of the second station device according to the updated network access permission of the target device when the network access permission update content indicates that the peer device allows the target device to connect to the peer device, the identification information of the peer device includes identification information of the station device 400, and the identification information of the second station device matches the identification information of the target device; or
rejecting the connection request of the second station device according to the updated network access permission of the target device when the network access permission update content indicates that the peer device forbids the target device to connect to the peer device, the identification information of the peer device includes identification information of the station device 400, and the identification information of the second station device matches the identification information of the target device.

Referring to FIG. 5, FIG. 5 is a schematic structural diagram of another station device according to an embodiment of the present invention. The station device 400 shown in FIG. 5 is obtained by optimizing the station device 400 shown in FIG. 4. As shown in FIG. 5, the station device 400 may further include:
a sending module 405, configured to forward, when the verification of the signature information by the verification module 402 succeeds, the network access permission update instruction to a station device other than the station device 400 and the configuration device in the Wi-Fi network.

Specifically, a specific manner of the forwarding, by the sending module 405 when the verification of the signature information by the verification module 402 succeeds, the network access permission update instruction to a station device other than the station device 400 and the configuration device in the Wi-Fi network may be:
when the verification of the signature information by the verification module 402 succeeds, sending a DPP discovery message to the station device other than the station device 400 and the configuration device in the Wi-Fi network, where the DPP discovery message carries the network access permission update instruction.

Specifically, a specific manner of the forwarding, by the sending module 405 when the verification of the signature information by the verification module 402 succeeds, the network access permission update instruction to a station device other than the station device 400 and the configuration device in the Wi-Fi network may be alternatively:
when the network access permission update instruction has not been forwarded to a third station device and the verification of the signature information by the verification module 402 succeeds, forwarding the network access permission update instruction to the third station device, and marking the third station device as an already-forwarded-to device, where the third station device is any device other than the station device 400 and the configuration device in the Wi-Fi network.

In still another feasible implementation, the station device 400 may further include:
a modification module 406, configured to: modify the network access permission update instruction, and replace the signature information of the configuration device with signature information of the station device 400, to obtain a new network access permission update instruction; and
a processing module 407, configured to: update the network access permission of the target device according to the new network access permission update instruction, and send the new network access permission update instruction to a station device other than the station device 400 in the Wi-Fi network.

It can be learned that according to the station device in FIG. 4 and FIG. 5, the configuration device generates the network access permission update instruction for the target device, and the network access permission update instruction may be for revoking the access permission of the target device in the Wi-Fi network or modifying the access permission of the target device in the Wi-Fi network. The network access permission update instruction includes the signature information of the configuration device and the identification information of the target device. When a device receives the network access permission update instruction, and the verification of the signature information succeeds, the device updates the network access permission of the target device. Further, the network access permission update instruction includes information such as the network identifier of the network in which the target device is located, and may further include the instruction generation time, the identification information of the update-executing device, and a time range of the network access permission. In this case, after receiving the network access permission update instruction, the device further determines, based on the foregoing information, whether the network identifier of the target device needs to be updated, so as to avoid repetitive network access permission update. In this way, network access permission update can be more targeted, thereby improving efficiency of updating the network access permission by each device in the Wi-Fi network. According to this embodiment of the present invention, the user may modify, based on a requirement, network access permission of any device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network.

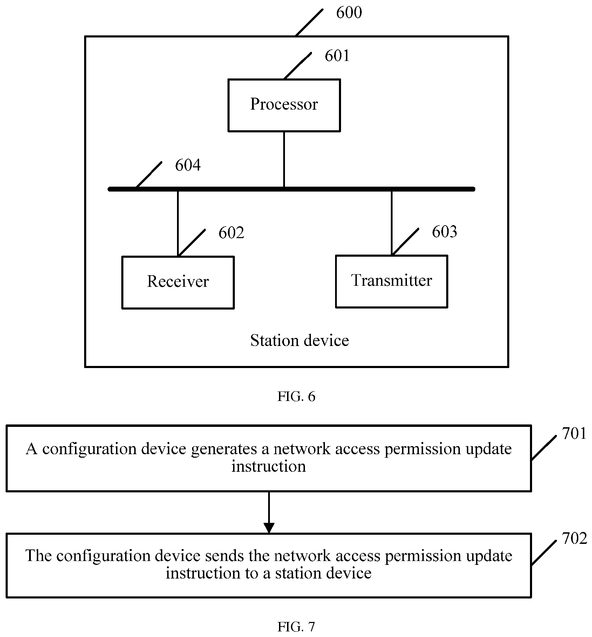

Based on the architecture of the Wi-Fi network shown in FIG. 1, an embodiment of the present invention discloses another station device. Referring to FIG. 6, FIG. 6 is a schematic structural diagram of still another station device not forming part of the present invention. As shown in FIG. 6, the station device 600 may include at least one processor 601, for example, a CPU, a receiver 602, a transmitter 603, and a communications bus 604.

The communications bus 604 is configured to implement communication and a connection between the components such as the processor 601, the receiver 602, and the transmitter 603.

The receiver 602 is configured to receive a network access permission update instruction generated by a configuration device in the Wi-Fi network. The network access permission update instruction is used to instruct to update network access permission of a target device in the Wi-Fi network, and the network access permission update instruction includes identification information of the target device and signature information of the configuration device.

The processor 601 is configured to verify the signature information.

The processor 601 is further configured to update the network access permission of the target device when the verification of the signature information succeeds.

The receiver 602 is further configured to receive a connection request message sent by a second station device. The second station device is any device other than the station device 600 in the Wi-Fi network.

The processor 601 is further configured to accept or reject a connection request of the second station device according to updated network access permission of the target device when identification information of the second station device matches the identification information of the target device.

In a feasible implementation, a specific manner of the accepting or rejecting, by the processor 601, a connection request of the second station device according to updated network access permission of the target device when identification information of the second station device matches the identification information of the target device may be:
accepting or rejecting the connection request of the second station device according to the updated network access permission of the target device when the network access permission update instruction further includes a network identifier of a network in which the target device is located, the network identifier is consistent with a network identifier of a network in which the second station device is located, and the identification information of the second station device matches the identification information of the target device; or
accepting or rejecting the connection request of the second station device according to the updated network access permission of the target device when the network access permission update instruction further includes time information of the network access permission, a current time falls within a time range indicated by the time information, and the identification information of the second station device matches the identification information of the target device; or
accepting or rejecting the connection request of the second station device according to the updated network access permission of the target device when the network access permission update instruction further includes a network identifier of a network in which the target device is located and the time information, the network identifier is consistent with a network identifier of a network in which the second station device is located, and a current time falls within a time range indicated by the time information.

When the connection request of the second station device is accepted or rejected according to the updated network access permission of the target device, a step of determining at least one of the network identifier and the time information of the network access permission is added. In this way, network access permission update can be more targeted, and the network access permission of the target device can be more finely limited, thereby improving the security of the Wi-Fi network.

In another feasible implementation, the network access permission update instruction may further include network access permission update content. The network access permission update content may specifically include identification information of a peer device, and the network access permission update content is used to indicate whether the peer device allows or forbids the target device to connect to the peer device. Therefore, a specific manner of the accepting or rejecting, by the processor 601, a connection request of the second station device according to updated network access permission of the target device when identification information of the second station device matches the identification information of the target device may be:
accepting the connection request of the second station device according to the updated network access permission of the target device when the network access permission update content indicates that the peer device allows the target device to connect to the peer device, the identification information of the peer device includes identification information of the station device 600, and the identification information of the second station device matches the identification information of the target device; or
rejecting the connection request of the second station device according to the updated network access permission of the target device when the network access permission update content indicates that the peer device forbids the target device to connect to the peer device, the identification information of the peer device includes identification information of the station device 600, and the identification information of the second station device matches the identification information of the target device.

In still another feasible implementation, a specific manner of the updating, by the processor 601, the network access permission of the target device according to the network access permission update instruction when the verification of the signature information succeeds may be:
updating the network access permission of the target device according to the network access permission update instruction when the network access permission update instruction satisfies an update condition and the verification of the signature information succeeds.

The update condition may include at least one of the following conditions:

The network access permission update instruction further includes a network identifier of a network in which the target device is located, and the network identifier is consistent with a network identifier of a network in which the station device 600 is located. A step of determining the network identifier is added, so that network access permission update is more targeted, thereby improving the security of the Wi-Fi network.

The network access permission update instruction further includes identification information of an update-executing device. The identification information of the update-executing device includes identification information of the station device 600. The update-executing device is at least one device that is to update the network access permission of the target device in the Wi-Fi network. In this way, network access permission update is more targeted, thereby improving efficiency of updating network access permission of a device in the Wi-Fi network.

The network access permission update instruction further includes a first generation time. The first generation time is later than a second generation time, the first generation time is used to indicate a generation time of the network access permission update instruction, and the second generation time is a generation time of a network access permission instruction corresponding to historical network access permission of the target device that is recorded by the station device 600. A generation time is added to a network access permission update instruction, so that effectiveness of a plurality of network access permission update instructions for a same target device can be distinguished, and a newly generated network access permission update instruction can be used as a reference, thereby avoiding repetitive network access permission update or an update conflict.

In still another feasible implementation, a specific manner of the updating, by the processor 601, the network access permission of the target device when the verification of the signature information succeeds may be alternatively:
when the network access permission update instruction is a network access permission revoking instruction and the verification of the signature information succeeds, deleting, according to the network access permission revoking instruction, historical network access permission of the target device that is recorded by the station device 600; or
when the network access permission update instruction is a network access permission modification instruction and the verification of the signature information succeeds, modifying the historical network access permission according to the network access permission modification instruction.

In still another feasible implementation, the transmitter 603 is configured to forward, when the verification of the signature information succeeds, the network access permission update instruction to a station device other than the station device 600 and the configuration device in the Wi-Fi network.

In still another feasible implementation, a specific manner of the forwarding, by the transmitter 603 when the verification of the signature information succeeds, the network access permission update instruction to a station device other than the station device 600 and the configuration device in the Wi-Fi network may be:
when the verification of the signature information succeeds, sending a DPP discovery message to the station device other than the station device 600 and the configuration device in the Wi-Fi network, where the DPP discovery message carries the network access permission update instruction.

In still another feasible implementation, a specific manner of the forwarding, by the transmitter 603 when the verification of the signature information succeeds, the network access permission update instruction to a station device other than the station device 600 and the configuration device in the Wi-Fi network may be alternatively:
when the network access permission update instruction has not been forwarded to a third station device and the verification of the signature information succeeds, forwarding the network access permission update instruction to the third station device, and marking the third station device as an already-forwarded-to device, where the third station device is any device other than the station device 600 and the configuration device in the Wi-Fi network.

In still another feasible implementation, the processor 601 is further configured to: modify the network access permission update instruction, and replace the signature information of the configuration device with signature information of the station device 600, to obtain a new network access permission update instruction.

The processor 601 is further configured to update the network access permission of the target device according to the new network access permission update instruction.

The transmitter 603 is further configured to send the new network access permission update instruction to a station device other than the station device 400 in the Wi-Fi network.

It can be learned that according to the station device in FIG. 6, the configuration device may generate the network access permission update instruction for the target device, and the network access permission update instruction may be for revoking the access permission of the target device in the Wi-Fi network or modifying the access permission of the target device in the Wi-Fi network. The network access permission update instruction may include the signature information of the configuration device and the identification information of the target device. When a device receives the network access permission update instruction, and the verification of the signature information succeeds, the device can update the network access permission of the target device. Further, the network access permission update instruction may further include information such as the network identifier of the network in which the target device is located, the instruction generation time, the identification information of the update-executing device, and a time range of the network access permission. In this case, after receiving the network access permission update instruction, the device may further determine, based on the foregoing information, whether the network identifier of the target device needs to be updated, so as to avoid repetitive network access permission update. In this way, network access permission update can be more targeted, thereby improving efficiency of updating the network access permission by each device in the Wi-Fi network. According to this embodiment of the present invention, the user may modify, based on a requirement, network access permission of any device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network.

Based on the architecture of the Wi-Fi network shown in FIG. 1, an embodiment of the present invention discloses still another network access permission management method. Referring to FIG. 7, FIG. 7 is a schematic flowchart of the still another network access permission management method not forming part of the present invention. As shown in FIG. 7, the network access permission management method may include the following steps.

701. A configuration device generates a network access permission update instruction.

In this embodiment of the present invention, the configuration device may include, but is not limited to, a configurator, another station device in the Wi-Fi network, or a device approved or trusted by all other station devices. The configuration device may generate the network access permission update instruction after being triggered by a user, or may generate the network access permission update instruction after receiving a request sent by another station device in the Wi-Fi network. The request sent by the another station device may also be triggered and generated by a user. A time point for the configuration device to generate the network access permission update instruction is not limited. This is not limited in this embodiment of the present invention.

In this embodiment of the present invention, the network access permission update instruction is used to instruct to update network access permission of a target device in the Wi-Fi network. The network access permission update instruction may include identification information of the target device and signature information of the configuration device. Certainly, the network access permission update instruction may further include a network identifier of a network in which the target device is located, identification information of an update-executing device, identification information of the configuration device, a generation time of the network access permission update instruction, and network access permission update content, that is, devices that specifically need to limit the target device to connect to the devices. This is not limited in this embodiment of the present invention.

In a feasible implementation, before the generating, by the configuration device, a network access permission update instruction, the method may further include:
receiving an update request message or an instruction used to instruct to update the network access permission of the target device. The instruction may be an instruction from a user (in this case, the receiving module may be specifically an input module in the configuration device, for example, a touchscreen that can receive user input) or an instruction generated by the configuration device (in this case, the receiving module may be a processor or a part of a processor in the configuration device, and may be a hardware or software interface that can be configured to receive an internal instruction). The update request message may be sent by another station device (in this case, the receiving module may be specifically a receiver, for example, an antenna).

In this case, the configuration device may generate the network access permission update instruction according to the instruction or the update request message.

During specific implementation, a user may indicate, by using a device in the Wi-Fi network, the network access permission of the target device that needs to be updated. In this case, the device generates the update request message according to the indication of the user, so as to send the update request message to the configuration device when establishing a connection to the configuration device. The configuration device may receive the update request message sent by the device, and generate the network access permission update instruction for the target device based on the update request message.

It should be noted that, the device sending the update request message to the configuration device also needs to be a device having relatively high reliability in the Wi-Fi network or a trusted device authenticated by the configuration device, thereby ensuring validity and security of the network access request update instruction generated by the configuration device.

702. The configuration device sends the network access permission update instruction to a station device.

In this embodiment of the present invention, there may be one or more station devices. This is not limited in this embodiment of the present invention. The configuration device may send the network access permission update instruction to the station device through broadcast or unicast, may send the network access permission update instruction when configuring a new Wi-Fi device to enter the Wi-Fi network, or may add the network access permission update instruction to a connection request when sending the connection request to a configured station device. The station device may be a node in the network. The node may establish a Wi-Fi connection to another node in the Wi-Fi network, so that the node can forward the network access permission update instruction to the another node. The node may be alternatively a central node in the Wi-Fi network, for example, an AP device. When other station devices need to access the network, most of the station devices are connected to the AP device. Therefore, the network access permission update instruction can be more quickly forwarded to each device in the Wi-Fi network, thereby improving efficiency of updating the network access permission.

Therefore, after the station device receives the network access permission update instruction and the verification of the signature information succeeds, the station device can update the network access permission of the target device according to the network access permission update instruction.

During specific implementation, a specific manner of the sending, by the configuration device, the network access permission update instruction to a station device may be:
sending a DPP configuration message to the station device, where the DPP configuration message carries the network access permission update instruction.

Specifically, in combination with the DPP protocol, the configuration device may add, when configuring a new Wi-Fi device to enter the Wi-Fi network, the network access permission update instruction to a DPP configuration response message in a DPP configuration protocol when configuring network access permission for the new Wi-Fi device, or may add, after configuring a new Wi-Fi device, the network access permission update instruction to a message when sending the message. Alternatively, the network access permission update instruction sent by the configuration device is sent to the station device together with another network access permission update instruction, or the network access permission update instruction is carried in a DPP discovery message when the DPP discovery message is sent. This is not limited in this embodiment of the present invention.

Correspondingly, the station device may receive the network access permission update instruction by receiving the DPP configuration response message.

It can be learned that in the method in FIG. 7, the configuration device may generate the network access permission update instruction for the target device, and the network access permission update instruction may be for revoking the access permission of the target device in the Wi-Fi network or modifying the access permission of the target device. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network. In addition, the configuration device may send the network access permission update instruction to some station devices in the Wi-Fi network. Then, the station devices forward the network access permission update instruction in the Wi-Fi network. In this way, efficiency of updating network access permission of a device can be effectively improved.

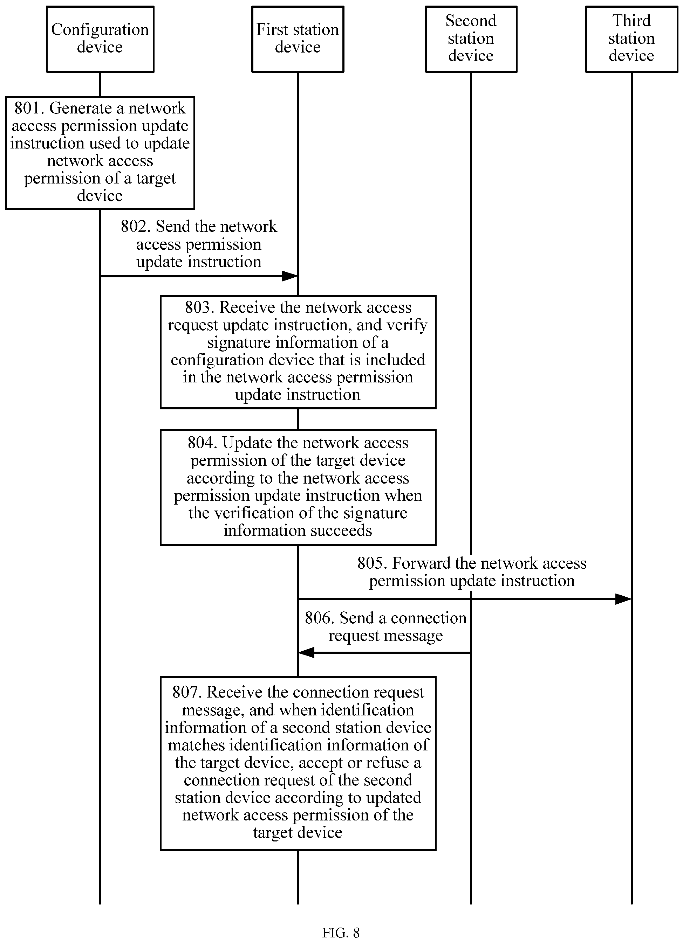

Based on the architecture of the Wi-Fi network shown in FIG. 1, an embodiment of the present invention discloses still another network access permission management method. Referring to FIG. 8, FIG. 8 is a schematic flowchart of the still another network access permission management method according to this embodiment of the present invention. As shown in FIG. 8, the network access permission management method includes the following steps.

801. A configuration device generates a network access permission update instruction used to update network access permission of a target device.

802. The configuration device sends the network access permission update instruction to a first station device.

803. The first station device receives the network access request update instruction, and verifies signature information of the configuration device that is included in the network access permission update instruction.

804. The first station device updates the network access permission of the target device according to the network access permission update instruction when the verification of the signature information succeeds.

805. The first station device forwards the network access permission update instruction to a third station device.

After the third station device receives the network access permission update instruction, operations performed by the third station device are the same as the operations performed by the first station device, and details are not described again in this embodiment of the present invention.

806. A second station device sends a connection request message to the first station device.

Specifically, the second station device mainly broadcasts the connection request message in the Wi-Fi network. The connection request message includes identification information of a device to which the second station device expects to connect. When receiving the message, each device in the network determines whether the identification information of the device to which the second station device expects to connect is identification information of the device. If the first station device receives the connection request message and determines that the device to which the second station device expects to connect is the first station device, it indicates that the second station device sends the connection request message to the first station device.

807. The first station device receives the connection request message, and when identification information of the second station device matches identification information of the target device, the first station device accepts or rejects a connection request of the second station device according to updated network access permission of the target device.

It should be noted that, the second station device and the third station device may be a same device in the Wi-Fi network.

It can be learned that in the method in FIG. 8, the configuration device generates the network access permission update instruction for the target device, and the network access permission update instruction may be for revoking the access permission of the target device in the Wi-Fi network or modifying the access permission of the target device in the Wi-Fi network. In this case, when a device receives the network access permission update instruction, and the verification of the signature information of the configuration device succeeds, the device updates the network access permission of the target device. The target device sends the connection request to the device and the device determines, according to the updated network access permission, whether to accept or reject the connection request of the target device. According to this embodiment of the present invention, the user may modify, based on a requirement, network access permission of any device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network. In addition, after receiving the network access permission update instruction, another device may further forward the instruction. In this way, the configuration device may be prevented from reconfiguring the network access permission of the target device for each device in the Wi-Fi network, thereby improving efficiency of updating the network access permission by each device in the Wi-Fi network.

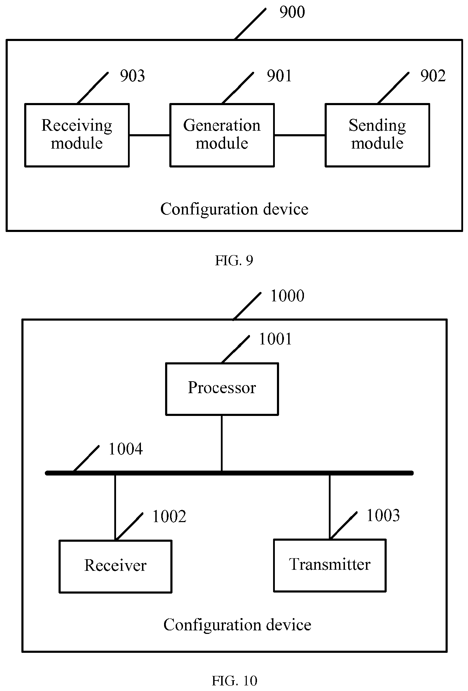

Based on the architecture of the Wi-Fi network shown in FIG. 1, an embodiment of the present invention discloses a configuration device. Referring to FIG. 9, FIG. 9 is a schematic structural diagram of the configuration device not forming part of the present invention. As shown in FIG. 9, the configuration device 900 may include the following modules:
a generation module 901, configured to generate a network access permission update instruction, where the network access permission update instruction is used to instruct to update network access permission of a target device in the Wi-Fi network, and the network access permission update instruction includes identification information of the target device and signature information of the configuration device 900; and
a sending module 902, configured to send the network access permission update instruction to a station device in the Wi-Fi network, to instruct the station device to verify the signature information and update network access permission of the target device after the verification of the signature information succeeds.

In a feasible implementation, the configuration device 900 may further include:
a receiving module 903, configured to receive an update request message or an instruction used to instruct to update the network access permission of the target device. The instruction may be an instruction from a user (in this case, the receiving module may be specifically an input module in the configuration device 900, for example, a touchscreen that can receive user input) or an instruction generated by the configuration device 900 (in this case, the receiving module may be a processor or a part of a processor in the configuration device 900, and may be a hardware or software interface that can be configured to receive an internal instruction). The update request message may be sent by another station device (in this case, the receiving module may be specifically a receiver, for example, an antenna).

In this case, a specific manner of the generating, by the generation module 901, a network access permission update instruction may be:
generating the network access permission update instruction according to the instruction or the update request message.

In another feasible implementation, a specific manner of the sending, by the sending module 902, the network access permission update instruction to a station device may be:
sending a DPP configuration message to the station device, where the DPP configuration message carries the network access permission update instruction.

It can be learned that according to the configuration device in FIG. 9, the configuration device may generate the network access permission update instruction for the target device, and the network access permission update instruction may be for revoking the access permission of the target device in the Wi-Fi network or modifying the access permission of the target device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network. In addition, the configuration device may send the network access permission update instruction to some station devices in the Wi-Fi network. Then, the station devices forward the network access permission update instruction in the Wi-Fi network. In this way, efficiency of updating network access permission of a device can be effectively improved.

Based on the architecture of the Wi-Fi network shown in FIG. 1, an embodiment of the present invention discloses another configuration device. Referring to FIG. 10, FIG. 10 is a schematic structural diagram of the another configuration device not forming part of the present invention. As shown in FIG. 10, the configuration device 1000 may include at least one processor 1001, for example, a CPU, a receiver 1002, a transmitter 1003, and a communications bus 1004.

The communications bus 1004 is configured to implement communication and a connection between the components such as the processor 1001, the receiver 1002, and the transmitter 1003.

The processor 1001 is configured to generate a network access permission update instruction. The network access permission update instruction is used to instruct to update network access permission of a target device in the Wi-Fi network, and the network access permission update instruction includes identification information of the target device and signature information of the configuration device 1000.

The transmitter 1003 is configured to send the network access permission update instruction to a station device in the Wi-Fi network, to instruct the station device to verify the signature information and update network access permission of the target device after the verification of the signature information succeeds.

In a feasible implementation, the receiver 1002 is configured to receive an update request message or an instruction used to instruct to update the network access permission of the target device. The instruction may be an instruction from a user (in this case, the receiving module may be specifically an input module in the configuration device 1000, for example, a touchscreen that can receive user input) or an instruction generated by the configuration device 1000 (in this case, the receiving module may be a processor or a part of a processor in the configuration device 1000, and may be a hardware or software interface that can be configured to receive an internal instruction). The update request message may be sent by another station device (in this case, the receiving module may be specifically a receiver, for example, an antenna).

In this case, a specific manner of the generating, by the processor 1001, a network access permission update instruction may be:
generating the network access permission update instruction based on the update request message.

In another feasible implementation, a specific manner of the sending, by the transmitter 1003, the network access permission update instruction to a station device may be:
sending a DPP configuration message to the station device, where the DPP configuration message carries the network access permission update instruction.

It can be learned that according to the configuration device in FIG. 10, the configuration device may generate the network access permission update instruction for the target device, and the network access permission update instruction may be for revoking the access permission of the target device in the Wi-Fi network or modifying the access permission of the target device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network. In addition, the configuration device may send the network access permission update instruction to some station devices in the Wi-Fi network. Then, the station devices forward the network access permission update instruction in the Wi-Fi network. In this way, efficiency of updating network access permission of a device can be effectively improved.

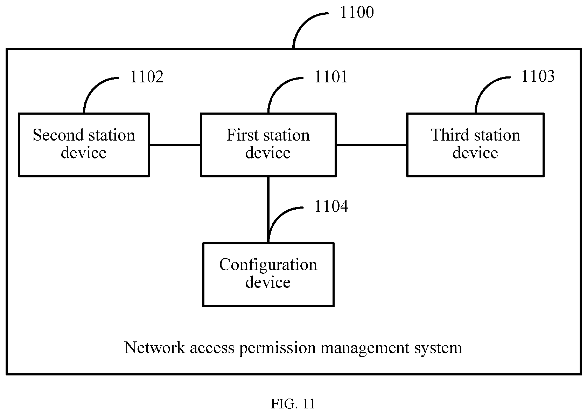

Based on the architecture of the Wi-Fi network shown in FIG. 1, an embodiment of the present invention discloses a network access permission management system. Referring to FIG. 11, FIG. 11 is a schematic structural diagram of the network access permission management system not forming part of the present invention. As shown in FIG. 11, the system 1100 may be applied to the Wi-Fi network. The system 1100 may include a first station device 1101, a second station device 1102, a third station device 1103, and a configuration device 1104. The first station device 1101 may be connected to all of the second station device 1102, the third station device 1103, and the configuration device 1104.

The configuration device 1104 is configured to generate a network access permission update instruction used to update network access permission of a target device. The network access permission update instruction includes identification information of the target device and signature information of the configuration device.

The configuration device 1104 may generate the network access permission update instruction after being triggered by a user, or may generate the network access permission update instruction when receiving an update request message sent by another device in the Wi-Fi network. This is not limited in this embodiment of the present invention.

The configuration device 1104 is used to send the network access permission update instruction to the first station device 1101.

It should be noted that, the configuration device 1104 may send the network access permission update instruction to one or more devices in the Wi-Fi network. This is not limited in this embodiment of the present invention.

The first station device 1101 is configured to: receive the network access permission update instruction sent by the configuration device 1104, and verify the signature information.

The first station device 1101 is further configured to: when the verification of the signature information succeeds, update the network access permission of the target device, and forward the network access permission update instruction to the third station device 1103.

After the third station device 1103 receives the network access permission update instruction sent by the first station device 1101, operations performed by the third station device 1103 are the same as the operations performed by the first station device 1101, and details are not described again in this embodiment of the present invention.

The second station device 1102 is configured to send a connection request message to the first station device 1101.

The first station device 1101 is further configured to: receive the connection request message sent by the second station device 1102, and when identification information of the second station device 1102 matches identification information of the target device, accept or refuse a connection request of the second station device 1102 according to updated network access permission of the target device.

In a feasible implementation, the network access permission update instruction generated by the configuration device 1104 further includes information such as the network identifier of the network in which the target device is located, the instruction generation time, the identification information of the update-executing device, and a time range of the network access permission. Therefore, after receiving the network access permission update instruction, the first station device 1101 may further determine, based on the foregoing information, whether the network identifier of the target device needs to be updated, so as to avoid repetitive network access permission update. In this way, network access permission update can be more targeted.

It should be noted that, the second station device 1102 and the third station device 1103 may be a same station device. This is not limited in this embodiment of the present invention.

It can be learned that in the network access permission management system in FIG. 11, the configuration device may generate the network access permission update instruction for the target device, and the network access permission update instruction may be for revoking the access permission of the target device in the Wi-Fi network or modifying the access permission of the target device in the Wi-Fi network. In this case, when a device receives the network access permission update instruction, and the verification of the signature information of the configuration device succeeds, the device can update the network access permission of the target device. If the target device sends the connection request to the device, the device can determine, according to the updated network access permission, whether to accept or reject the connection request of the target device. According to this embodiment of the present invention, the user may modify, based on a requirement, network access permission of any device in the Wi-Fi network. If a device is lost, the user may revoke network access permission of the device in this manner, and certainly, may restore the network access permission of the device in this manner after the device is found back. In this way, communication security between devices in the Wi-Fi network can be ensured, thereby improving security of the Wi-Fi network. In addition, after receiving the network access permission update instruction, another device may further forward the instruction. In this way, the configuration device may be prevented from reconfiguring the network access permission of the target device for each device in the Wi-Fi network, thereby improving efficiency of updating the network access permission by each device in the Wi-Fi network.

It should be noted that, in the foregoing embodiments, the descriptions of the embodiments have respective focuses. For a part that is not described in detail in an embodiment, reference may be made to related descriptions in other embodiments.

A sequence of the steps of the method in the embodiments of the present invention may be adjusted, and certain steps may also be merged or removed based on an actual requirement.

Merging, division, and removing may be performed on the modules in the station device and the configuration device in the embodiments of the present invention based on an actual requirement.

The modules of the embodiments of the present invention may be executed by a universal integrated circuit, such as a CPU (Central Processing Unit, central processing unit) or an ASIC (Application Specific Integrated Circuit, application specific integrated circuit).

A person of ordinary skill in the art can understand that all or some of the procedures of the methods in the embodiments may be implemented by a computer program instructing relevant hardware. The program may be stored in a computer readable storage medium. When the program runs, the procedures of the methods in the embodiments may be included. The storage medium may be a magnetic disk, an optical disc, a read-only memory (Read-Only Memory, ROM), a random access memory (Random Access Memory, RAM), or the like.

The network access permission management method and the related device disclosed in the embodiments of the present invention are described in detail above. In this specification, specific examples are used to describe the principle and implementation manners of the present invention, and the descriptions of the embodiments are only intended to help understand the present invention. Meanwhile, a person of ordinary skill in the art may, based on the idea of the present invention, make modifications with respect to the specific implementation manners and the application scope. The scope of the invention is defined by the following claims.

## Claims

1. A network access permission management method, applied to a wireless fidelity Wi-Fi network, and comprising:
• receiving, by a first station device in the Wi-Fi network, a network access permission update instruction generated by a configuration device in the Wi-Fi network, wherein the network access permission update instruction is used to instruct to update network access permission of a target device in the Wi-Fi network, and the network access permission update instruction comprises identification information of the target device and signature information of the configuration device, wherein the network access permission update instruction further comprises a network identifier of a network in which the target device is located (step 201);
• verifying, by the first station device, the signature information (step 202);
• updating, by the first station device, the network access permission of the target device according to the network access permission update instruction when the verification of the signature information succeeds (step 203);
• receiving, by the first station device, a connection request message sent by a second station device, wherein the second station device is any device other than the first station device in the Wi-Fi network (step 204); and
• accepting or rejecting, by the first station device, a connection request of the second station device according to the updated network access permission of the target device when:
∘ identification information of the second station device matches the identification information of the target device, and
∘ the network identifier is consistent with a network identifier of a network in which the second station device is located (step 205).

2. The method according to claim 1, wherein the method further comprises:
forwarding, by the first station device when the verification of the signature information succeeds, the network access permission update instruction to a station device other than the first station device and the configuration device in the Wi-Fi network.

3. The method according to claim 2, wherein the forwarding, by the first station device, the network access permission update instruction to the station device other than the first station device and the configuration device in the Wi-Fi network comprises:
sending, by the first station device, a Device Provisioning Protocol, DPP, discovery message to the station device other than the first station device and the configuration device in the Wi-Fi network, wherein the DPP discovery message carries the network access permission update instruction.

4. The method according to claim 2 or 3, wherein the forwarding, by the first station device, the network access permission update instruction to the station device other than the first station device and the configuration device in the Wi-Fi network comprises:
when the first station device has not forwarded the network access permission update instruction to a third station device, forwarding, by the first station device, the network access permission update instruction to the third station device, and marking the third station device as an already-forwarded-to device, wherein the third station device is any device other than the first station device and the configuration device in the Wi-Fi network.

5. The method according to any one of claims 1 to 4, wherein the updating, by the first station device, the network access permission of the target device according to the network access permission update instruction comprises:
updating, by the first station device, the network access permission of the target device according to the network access permission update instruction when the network access permission update instruction satisfies an update condition; and
the update condition comprises at least one of the following:
the network identifier is consistent with a network identifier of a network in which the first station device is located;
the network access permission update instruction further comprises identification information of an update-executing device, wherein the identification information of the update-executing device comprises identification information of the first station device, and the update-executing device is any one or more types of devices in the Wi-Fi network or the update-executing device is any one or more devices in the Wi-Fi network; and
the network access permission update instruction further comprises a first generation time, wherein the first generation time is later than a second generation time, the first generation time is a generation time of the network access permission update instruction, and the second generation time is a generation time of a network access permission instruction corresponding to historical network access permission of the target device that is recorded by the first station device.

6. The method according to any one of claims 1 to 4, wherein the updating, by the first station device, the network access permission of the target device according to the network access permission update instruction comprises:
when the network access permission update instruction is a network access permission revoking instruction, deleting, by the first station device according to the network access permission revoking instruction, historical network access permission of the target device that is recorded by the first station device; or
when the network access permission update instruction is a network access permission modification instruction, modifying, by the first station device, the historical network access permission according to the network access permission modification instruction.

7. A station device, applied to a Wi-Fi network, and comprising:
• a receiving module (401) configured to receive a network access permission update instruction generated by a configuration device in the Wi-Fi network, wherein the network access permission update instruction is used to instruct to update network access permission of a target device in the Wi-Fi network, and the network access permission update instruction comprises identification information of the target device and signature information of the configuration device, wherein the network access permission update instruction further comprises a network identifier of a network in which the target device is located;
• a verification module (402) configured to verify the signature information;
• an update module (403) configured to update the network access permission of the target device according to the network access permission update instruction when the verification of the signature information by the verification module succeeds, wherein
• the receiving module (401) is further configured to receive a connection request message sent by a second station device, wherein the second station device is any device other than the station device in the Wi-Fi network; and
• a response module (404) configured to accept or reject a connection request of the second station device according to the network access permission, updated by the update module, of the target device when:
∘ identification information of the second station device matches the identification information of the target device, and
∘ the network identifier is consistent with a network identifier of a network in which the second station device is located.

8. The station device according to claim 7, wherein the station device further comprises:
a sending module configured to forward, when the verification of the signature information by the verification module succeeds, the network access permission update instruction to a station device other than the station device and the configuration device in the Wi-Fi network.

## Patentansprüche

1. Netzwerkzugriffsberechtigungsverwaltungsverfahren, das in einem "Wireless Fidelity"-Netzwerk, Wi-Fi-Netzwerk, eingesetzt wird, und umfassend:
• Empfangen, durch eine erste Stationsvorrichtung im Wi-Fi-Netzwerk, einer Netzwerkzugriffsberechtigungsaktualisierungsanweisung, die durch eine Konfigurationsvorrichtung im Wi-Fi-Netzwerk erzeugt wird, wobei die Netzwerkzugriffsberechtigungsaktualisierungsanweisung zum Anweisen einer Aktualisierung einer Netzwerkzugriffsberechtigung einer Zielvorrichtung im Wi-Fi-Netzwerk verwendet wird und die Netzwerkzugriffsberechtigungsaktualisierungsanweisung Identifikationsinformationen der Zielvorrichtung und Signaturinformationen der Konfigurationsvorrichtung umfasst, wobei die Netzwerkzugriffsberechtigungsaktualisierungsanweisung ferner eine Netzwerkkennung eines Netzwerks, in dem sich die Zielvorrichtung befindet, umfasst (Schritt 201);
• Verifizieren, durch die erste Stationsvorrichtung, der Signaturinformationen (Schritt 202);
• Aktualisieren, durch die erste Stationsvorrichtung, der Netzwerkzugriffsberechtigung der Zielvorrichtung gemäß der Netzwerkzugriffsberechtigungsaktualisierungsanweisung, wenn die Verifizierung der Signaturinformationen erfolgreich ist (Schritt 203);
• Empfangen, durch die erste Stationsvorrichtung, einer Verbindungsanforderungsnachricht, die durch eine zweite Stationsvorrichtung gesendet wird, wobei die zweite Stationsvorrichtung eine beliebige Vorrichtung außer der ersten Stationsvorrichtung im Wi-Fi-Netzwerk ist (Schritt 204); und
• Annehmen oder Ablehnen, durch die erste Stationsvorrichtung, einer Verbindungsanforderung der zweiten Stationsvorrichtung gemäß der aktualisierten Netzwerkzugriffsberechtigung der Zielvorrichtung, wenn:
∘ Identifikationsinformationen der zweiten Stationsvorrichtung mit den Identifikationsinformationen der Zielvorrichtung übereinstimmen und
∘ die Netzwerkkennung mit einer Netzwerkkennung eines Netzwerks, in dem sich die zweite Stationsvorrichtung befindet, übereinstimmt (Schritt 205).

2. Verfahren nach Anspruch 1, wobei das Verfahren ferner umfasst:
Weiterleiten, durch die erste Stationsvorrichtung, wenn die Verifizierung der Signaturinformationen erfolgreich ist, der Netzwerkzugriffsberechtigungsaktualisierungsanweisung an eine Stationsvorrichtung außer der ersten Stationsvorrichtung und der Konfigurationsvorrichtung im Wi-Fi-Netzwerk.

3. Verfahren nach Anspruch 2, wobei das Weiterleiten, durch die erste Stationsvorrichtung, der Netzwerkzugriffsberechtigungsaktualisierungsanweisung an die Stationsvorrichtung außer der ersten Stationsvorrichtung und der Konfigurationsvorrichtung im Wi-Fi-Netzwerk umfasst:
Senden, durch die erste Stationsvorrichtung, einer "Device Provisioning Protocol"-Ermittlungsnachricht, DPP-Ermittlungsnachricht, an die Stationsvorrichtung außer der ersten Stationsvorrichtung und der Konfigurationsvorrichtung im Wi-Fi-Netzwerk, wobei die DPP-Ermittlungsnachricht die Netzwerkzugriffsberechtigungsaktualisierungsanweisung überträgt.

4. Verfahren nach Anspruch 2 oder 3, wobei das Weiterleiten, durch die erste Stationsvorrichtung, der Netzwerkzugriffsberechtigungsaktualisierungsanweisung an die Stationsvorrichtung außer der ersten Stationsvorrichtung und der Konfigurationsvorrichtung im Wi-Fi-Netzwerk umfasst:
wenn die erste Stationsvorrichtung die Netzwerkzugriffsberechtigungsaktualisierungsanweisung nicht an eine dritte Stationsvorrichtung weitergeleitet hat, Weiterleiten, durch die erste Stationsvorrichtung, der Netzwerkzugriffsberechtigungsaktualisierungsanweisung an die dritte Stationsvorrichtung und Kennzeichnen der dritten Stationsvorrichtung als eine Vorrichtung, an die die Weiterleitung bereits erfolgt ist, wobei die dritte Stationsvorrichtung eine beliebige Vorrichtung außer der ersten Stationsvorrichtung und der Konfigurationsvorrichtung im Wi-Fi-Netzwerk ist.

5. Verfahren nach einem der Ansprüche 1 bis 4, wobei das Aktualisieren, durch die erste Stationsvorrichtung, der Netzwerkzugriffsberechtigung der Zielvorrichtung gemäß der Netzwerkzugriffsberechtigungsaktualisierungsanweisung umfasst:
Aktualisieren, durch die erste Stationsvorrichtung, der Netzwerkzugriffsberechtigung der Zielvorrichtung gemäß der Netzwerkzugriffsberechtigungsaktualisierungsanweisung, wenn die Netzwerkzugriffsberechtigungsaktualisierungsanweisung eine Aktualisierungsbedingung erfüllt; und
die Aktualisierungsbedingung zumindest eines umfasst von Folgendem:
die Netzwerkkennung stimmt mit einer Netzwerkkennung eines Netzwerks, in dem sich die erste Stationsvorrichtung befindet, überein;
die Netzwerkzugriffsberechtigungsaktualisierungsanweisung umfasst ferner Identifikationsinformationen einer Aktualisierungsausführungsvorrichtung, wobei die Identifikationsinformationen der Aktualisierungsausführungsvorrichtung Identifikationsinformationen der ersten Stationsvorrichtung umfassen und die Aktualisierungsausführungsvorrichtung ein beliebiger oder beliebige mehrere Typen von Vorrichtungen im Wi-Fi-Netzwerk ist oder die Aktualisierungsausführungsvorrichtung eine beliebige oder beliebige mehrere Vorrichtungen im Wi-Fi-Netzwerk ist; und
die Netzwerkzugriffsberechtigungsaktualisierungsanweisung umfasst ferner eine erste Erzeugungszeit, wobei die erste Erzeugungszeit später als eine zweite Erzeugungszeit ist, die erste Erzeugungszeit eine Erzeugungszeit der Netzwerkzugriffsberechtigungsaktualisierungsanweisung ist und die zweite Erzeugungszeit eine Erzeugungszeit einer Netzwerkzugriffsberechtigungsanweisung entsprechend einer historischen Netzwerkzugriffsberechtigung der Zielvorrichtung, die durch die erste Stationsvorrichtung erfasst ist, ist.

6. Verfahren nach einem der Ansprüche 1 bis 4, wobei das Aktualisieren, durch die erste Stationsvorrichtung, der Netzwerkzugriffsberechtigung der Zielvorrichtung gemäß der Netzwerkzugriffsberechtigungsaktualisierungsanweisung umfasst:
wenn die Netzwerkzugriffsberechtigungsaktualisierungsanweisung eine Netzwerkzugriffsberechtigungswiderrufsanweisung ist, Löschen, durch die erste Stationsvorrichtung gemäß der Netzwerkzugriffsberechtigungswiderrufsanweisung, einer historischen Netzwerkzugriffsberechtigung der Zielvorrichtung, die durch die erste Stationsvorrichtung erfasst ist; oder
wenn die Netzwerkzugriffsberechtigungsaktualisierungsanweisung eine Netzwerkzugriffsberechtigungsmodifikationsanweisung ist, Modifizieren, durch die erste Stationsvorrichtung, der historischen Netzwerkzugriffsberechtigung gemäß der Netzwerkzugriffsberechtigungsmodifikationsanweisung.

7. Stationsvorrichtung, die in einem Wi-Fi-Netzwerk eingesetzt wird, und umfassend:
• ein Empfangsmodul (401), das zum Empfangen einer Netzwerkzugriffsberechtigungsaktualisierungsanweisung, die durch eine Konfigurationsvorrichtung im Wi-Fi-Netzwerk erzeugt wird, ausgelegt ist, wobei die Netzwerkzugriffsberechtigungsaktualisierungsanweisung zum Anweisen einer Aktualisierung einer Netzwerkzugriffsberechtigung einer Zielvorrichtung im Wi-Fi-Netzwerk verwendet wird und die Netzwerkzugriffsberechtigungsaktualisierungsanweisung Identifikationsinformationen der Zielvorrichtung und Signaturinformationen der Konfigurationsvorrichtung umfasst, wobei die Netzwerkzugriffsberechtigungsaktualisierungsanweisung ferner eine Netzwerkkennung eines Netzwerks, in dem sich die Zielvorrichtung befindet, umfasst;
• ein Verifizierungsmodul (402), das zum Verifizieren der Signaturinformationen ausgelegt ist;
• ein Aktualisierungsmodul (403), das zum Aktualisieren der Netzwerkzugriffsberechtigung der Zielvorrichtung gemäß der Netzwerkzugriffsberechtigungsaktualisierungsanweisung, wenn die Verifizierung der Signaturinformationen durch das Verifizierungsmodul erfolgreich ist, ausgelegt ist, wobei
• das Empfangsmodul (401) ferner zum Empfangen einer Verbindungsanforderungsnachricht, die durch eine zweite Stationsvorrichtung gesendet wird, ausgelegt ist, wobei die zweite Stationsvorrichtung eine beliebige Vorrichtung außer der Stationsvorrichtung im Wi-Fi-Netzwerk ist; und
• ein Antwortmodul (404), das zum Annehmen oder Ablehnen einer Verbindungsanforderung der zweiten Stationsvorrichtung gemäß der Netzwerkzugriffsberechtigung, aktualisiert durch das Aktualisierungsmodul, der Zielvorrichtung, ausgelegt ist, wenn:
∘ Identifikationsinformationen der zweiten Stationsvorrichtung mit den Identifikationsinformationen der Zielvorrichtung übereinstimmen und
∘ die Netzwerkkennung mit einer Netzwerkkennung eines Netzwerks, in dem sich die zweite Stationsvorrichtung befindet, übereinstimmt.

8. Stationsvorrichtung nach Anspruch 7, wobei die Stationsvorrichtung ferner umfasst:
ein Sendemodul, das zum Weiterleiten, wenn die Verifizierung der Signaturinformationen durch das Verifizierungsmodul erfolgreich ist, der Netzwerkzugriffsberechtigungsaktualisierungsanweisung an eine Stationsvorrichtung außer der Stationsvorrichtung und der Konfigurationsvorrichtung im Wi-Fi-Netzwerk ausgelegt ist.

## Revendications

1. Procédé de gestion d'une permission d'accès au réseau, appliqué à un réseau de fidélité sans fil Wi-Fi, et comprenant :
• la réception, par un premier dispositif de station dans le réseau Wi-Fi, d'une instruction de mise à jour d'une permission d'accès au réseau générée par un dispositif de configuration dans le réseau Wi-Fi, dans lequel l'instruction de mise à jour d'une permission d'accès au réseau est utilisée pour ordonner de mettre à jour une permission d'accès au réseau d'un dispositif cible dans le réseau Wi-Fi, et l'instruction de mise à jour d'une permission d'accès au réseau comprend des informations d'identification du dispositif cible et des informations de signature du dispositif de configuration, dans lequel l'instruction de mise à jour d'une permission d'accès au réseau comprend en outre un identifiant de réseau d'un réseau dans lequel le dispositif cible est localisé (étape 201) ;
• la vérification, par le premier dispositif de station, des informations de signature (étape 202) ;
• la mise à jour, par le premier dispositif de station, de la permission d'accès au réseau du dispositif cible conformément à l'instruction de mise à jour d'une permission d'accès au réseau lorsque la vérification des informations de signature réussit (étape 203) ;
• la réception, par le premier dispositif de station, d'un message de demande de connexion envoyé par un deuxième dispositif de station, le deuxième dispositif de station étant n'importe quel dispositif autre que le premier dispositif de station dans le réseau Wi-Fi (étape 204) ; et
• l'acceptation ou le rejet, par le premier dispositif de station, d'une demande de connexion du deuxième dispositif de station conformément à la permission d'accès au réseau mise à jour du dispositif cible lorsque :
∘ des informations d'identification du deuxième dispositif de station correspondent aux informations d'identification du dispositif cible, et
∘ l'identifiant de réseau concorde avec un identifiant de réseau d'un réseau dans lequel le deuxième dispositif de station est localisé (étape 205).

2. Procédé selon la revendication 1, le procédé comprenant en outre :
le réacheminement, par le premier dispositif de station lorsque la vérification des informations de signature réussit, de l'instruction de mise à jour d'une permission d'accès au réseau vers un dispositif de station autre que le premier dispositif de station et le dispositif de configuration dans le réseau Wi-Fi.

3. Procédé selon la revendication 2, dans lequel le réacheminement, par le premier dispositif de station, de l'instruction de mise à jour d'une permission d'accès au réseau vers le dispositif de station autre que le premier dispositif de station et le dispositif de configuration dans le réseau Wi-Fi comprend :
l'envoi, par le premier dispositif de station, d'un message de découverte du protocole de fourniture de dispositif (*Device Provisioning Protocol*), DPP, au dispositif de station autre que le premier dispositif de station et le dispositif de configuration dans le réseau Wi-Fi, le message de découverte du DPP portant l'instruction de mise à jour d'une permission d'accès au réseau.

4. Procédé selon la revendication 2 ou 3, dans lequel le réacheminement, par le premier dispositif de station, de l'instruction de mise à jour d'une permission d'accès au réseau vers le dispositif de station autre que le premier dispositif de station et le dispositif de configuration dans le réseau Wi-Fi comprend :
lorsque le premier dispositif de station n'a pas réacheminé l'instruction de mise à jour d'une permission d'accès au réseau vers un troisième dispositif de station, le réacheminement, par le premier dispositif de station, de l'instruction de mise à jour d'une permission d'accès au réseau vers le troisième dispositif de station, et le marquage du troisième dispositif de station comme étant un dispositif ayant déjà obtenu un réacheminement, le troisième dispositif de station étant n'importe quel dispositif autre que le premier dispositif de station et le dispositif de configuration dans le réseau Wi-Fi.

5. Procédé selon n'importe laquelle des revendications 1 à 4, dans lequel la mise à jour, par le premier dispositif de station, de la permission d'accès au réseau du dispositif cible conformément à l'instruction de mise à jour d'une permission d'accès au réseau comprend :
la mise à jour, par le premier dispositif de station, de la permission d'accès au réseau du dispositif cible conformément à l'instruction de mise à jour d'une permission d'accès au réseau lorsque l'instruction de mise à jour d'une permission d'accès au réseau satisfait à une condition de mise à jour ; et
la condition de mise à jour comprend au moins un des éléments suivants :
l'identifiant de réseau concorde avec un identifiant de réseau d'un réseau dans lequel le premier dispositif de station est localisé ;
l'instruction de mise à jour d'une permission d'accès au réseau comprend en outre des informations d'identification d'un dispositif exécutant la mise à jour, les informations d'identification du dispositif exécutant la mise à jour comprenant des informations d'identification du premier dispositif de station, et le dispositif exécutant la mise à jour étant n'importe quel type ou plusieurs types de dispositifs dans le réseau Wi-Fi ou le dispositif exécutant la mise à jour étant n'importe quel dispositif ou plusieurs dispositifs dans le réseau Wi-Fi ; et
l'instruction de mise à jour d'une permission d'accès au réseau comprend en outre un premier temps de génération, le premier temps de génération se situant plus tard qu'un deuxième temps de génération, le premier temps de génération étant un temps de génération de l'instruction de mise à jour d'une permission d'accès au réseau, et le deuxième temps de génération étant un temps de génération d'une instruction de permission d'accès au réseau correspondant à une permission d'accès au réseau historique du dispositif cible qui est enregistrée par le premier dispositif de station.

6. Procédé selon n'importe laquelle des revendications 1 à 4, dans lequel la mise à jour, par le premier dispositif de station, de la permission d'accès au réseau du dispositif cible conformément à l'instruction de mise à jour d'une permission d'accès au réseau comprend :
lorsque l'instruction de mise à jour d'une permission d'accès au réseau est une instruction de révocation d'une permission d'accès au réseau, la suppression, par le premier dispositif de station conformément à l'instruction de révocation d'une permission d'accès au réseau, d'une permission d'accès au réseau historique du dispositif cible qui est enregistrée par le premier dispositif de station ; ou
lorsque l'instruction de mise à jour d'une permission d'accès au réseau est une instruction de modification d'une permission d'accès au réseau, la modification, par le premier dispositif de station, de la permission d'accès au réseau historique conformément à l'instruction de modification d'une permission d'accès au réseau.

7. Dispositif de station, appliqué à un réseau Wi-Fi, et comprenant :
• un module de réception (401) configuré pour recevoir une instruction de mise à jour d'une permission d'accès au réseau générée par un dispositif de configuration dans le réseau Wi-Fi, dans lequel l'instruction de mise à jour d'une permission d'accès au réseau est utilisée pour ordonner de mettre à jour une permission d'accès au réseau d'un dispositif cible dans le réseau Wi-Fi, et l'instruction de mise à jour d'une permission d'accès au réseau comprend des informations d'identification du dispositif cible et des informations de signature du dispositif de configuration, dans lequel l'instruction de mise à jour d'une permission d'accès au réseau comprend en outre un identifiant de réseau d'un réseau dans lequel le dispositif cible est localisé ;
• un module de vérification (402) configuré pour vérifier les informations de signature ;
• un module de mise à jour (403) configuré pour mettre à jour la permission d'accès au réseau du dispositif cible conformément à l'instruction de mise à jour d'une permission d'accès au réseau lorsque la vérification des informations de signature par le module de vérification réussit, dans lequel
• le module de réception (401) est configuré en outre pour recevoir un message de demande de connexion envoyé par un deuxième dispositif de station, le deuxième dispositif de station étant n'importe quel dispositif autre que le dispositif de station dans le réseau Wi-Fi ; et
• un module de réponse (404) configuré pour accepter ou rejeter une demande de connexion du deuxième dispositif de station conformément à la permission d'accès au réseau, mise à jour par le module de mise à jour, du dispositif cible lorsque :
∘ des informations d'identification du deuxième dispositif de station correspondent aux informations d'identification du dispositif cible, et
∘ l'identifiant de réseau concorde avec un identifiant de réseau d'un réseau dans lequel le deuxième dispositif de station est localisé.

8. Dispositif de station selon la revendication 7, le dispositif de station comprenant en outre :
un module d'envoi configuré pour réacheminer, lorsque la vérification des informations de signature par le module de vérification réussit, l'instruction de mise à jour d'une permission d'accès au réseau vers un dispositif de station autre que le dispositif de station et le dispositif de configuration dans le réseau Wi-Fi.
